(19)

**Europäisches Patentamt**
**European Patent Office**
**Office européen des brevets**

(11) **EP 4 589 946 A1**

(12) **EUROPEAN PATENT APPLICATION**
published in accordance with Art. 153(4) EPC

(43) Date of publication:
**23.07.2025 Bulletin 2025/30**

(21) Application number: **23865891.8**

(22) Date of filing: **15.09.2023**

(51) International Patent Classification (IPC):
$H04N\ 19/132^{(2014.01)}$    $H04N\ 19/186^{(2014.01)}$
$H04N\ 19/105^{(2014.01)}$    $H04N\ 19/70^{(2014.01)}$
$H04N\ 19/593^{(2014.01)}$

(52) Cooperative Patent Classification (CPC):
**H04N 19/105; H04N 19/132; H04N 19/186;**
**H04N 19/593; H04N 19/70**

(86) International application number:
**PCT/KR2023/013885**

(87) International publication number:
**WO 2024/058595 (21.03.2024 Gazette 2024/12)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.09.2022 KR 20220117373**
           **13.09.2023 KR 20230122032**

(71) Applicant: **KT Corporation**
**Seongnam-si, Gyeonggi-do 13606 (KR)**

(72) Inventor: **LIM, Sung Won**
**Seongnam-si, Gyeonggi-do 13606 (KR)**

(74) Representative: **Schmitt-Nilson Schraud Waibel**
**Wohlfrom**
**Patentanwälte Partnerschaft mbB**
**Pelkovenstraße 143**
**80992 München (DE)**

(54) **IMAGE ENCODING/DECODING METHOD AND RECORDING MEDIUM STORING BITSTREAM**

(57)    An image encoding/decoding method according to the present invention comprises the steps of: deriving filter coefficients for prediction of a chroma block; and on the basis of the filter coefficients, deriving a prediction sample for the chroma block by filtering a plurality of luma reconstructed samples within a luma block corresponding to the chroma block.

【FIG. 1】

**Description**

[Technical Field]

The present disclosure relates to a method and a device for processing a video signal.

[Background Art]

Recently, demands for high-resolution and high-quality images such as HD(High Definition) images and UHD(Ultra High Definition) images have increased in a variety of application fields. As image data becomes high-resolution and high-quality, the volume of data relatively increases compared to the existing image data, so when image data is transmitted by using media such as the existing wire and wireless broadband circuit or is stored by using the existing storage medium, expenses for transmission and expenses for storage increase. High efficiency image compression technologies may be utilized to resolve these problems which are generated as image data becomes high-resolution and high-quality.

There are various technologies such as an inter prediction technology which predicts a pixel value included in a current picture from a previous or subsequent picture of a current picture with an image impression technology, an intra prediction technology which predicts a pixel value included in a current picture by using pixel information in a current picture, an entropy encoding technology which assigns a short sign to a value with high appearance frequency and assigns a long sign to a value with low appearance frequency and so on, and image data may be effectively compressed and transmitted or stored by using these image compression technologies.

On the other hand, as demands for a high-resolution image have increased, demands for stereo-scopic image contents have increased as a new image service. A video compression technology for effectively providing high-resolution and ultra high-resolution stereo-scopic image contents has been discussed.

[Disclosure]

[Technical Problem]

In encoding/decoding an image signal, the present disclosure is to provide a method and a device for predicting a chroma block by using a reconstructed luma block.

In encoding/decoding an image signal, the present disclosure is to provide a method and a device for predicting a chroma block based on the linearity of a luma component and a chroma component.

In encoding/decoding an image signal, the present disclosure is to provide a method and a device for predicting a chroma block in a unit of a sub-block.

In encoding/decoding an image signal, the present disclosure is to provide a method and a device for deriving a filter parameter for chroma block prediction by using a similarity between sub-blocks.

Technical effects of the present disclosure may be nonlimited by the above-mentioned technical effects, and other unmentioned technical effects may be clearly understood from the following description by those having ordinary skill in the technical field to which the present disclosure pertains.

[Technical Solution]

An image encoding/decoding method according to the present disclosure includes deriving filter coefficients for prediction of a chroma block; and based on the filter coefficients, deriving a prediction sample for the chroma block by filtering a plurality of luma reconstructed samples within a luma block corresponding to the chroma block.

In an image decoding/encoding method according to the present disclosure, a shape of a filter applied to the luma reconstructed samples is determined based on at least one of a color format or a size or a shape of a current block, and the current block may be the chroma block or the luma block.

In an image decoding/encoding method according to the present disclosure, the filter is determined as one of a plurality of filter candidates, and the plurality of filter candidates may include a first filter candidate in a square shape and a second filter candidate in a non-square shape.

In an image decoding/encoding method according to the present disclosure, the filter coefficients may be derived based on reconstructed samples included in a luma reference region around the luma block and reconstructed samples included in a chroma reference region around the chroma block.

In an image decoding/encoding method according to the present disclosure, the filter coefficient may be derived based on a feature value of reconstructed samples included in the luma reference region.

In an image decoding/encoding method according to the present disclosure, the feature value may be a gradient value derived by applying a mask to reconstructed samples included in the luma reference region.

In an image decoding/encoding method according to the present disclosure, the mask is one of a plurality of mask candidates, and selecting the mask among the plurality of mask candidates may be determined based on at least one of a color format or a filter shape.

In an image decoding/encoding method according to the present disclosure, prediction for the chroma block may be performed in a unit of a sub-block.

In an image decoding/encoding method according to the present disclosure, a class index may be allocated to a luma sub-block corresponding to a chroma sub-block in the chroma block, and the filter coefficient may be derived based on a reference sub-block to which the same class index as that allocated to the luma sub-block is allocated within a reference region around the luma block.

In an image decoding/encoding method according to the present disclosure, a class index allocated to the luma sub-block may be derived based on at least one of the first cross-directional gradients or the second cross-directional gradients for reconstructed samples within the luma sub-block.

In an image decoding/encoding method according to the present disclosure, when there is no reference sub-block to which the same class index as that allocated to the luma sub-block is allocated within the reference region around the luma block, the filter coefficient may be set as a default value.

In an image decoding/encoding method according to the present disclosure, when there is no reference sub-block to which the same class index as that allocated to the luma sub-block is allocated within the reference region around the luma block, the filter coefficient may be derived by using a reference sub-block to which the class index allocated to the luma sub-block and a class index with the smallest difference value are allocated.

In an image decoding/encoding method according to the present disclosure, whether the prediction is performed in a unit of the sub-block may be determined based on a flag parsed from a bitstream.

A computer readable recording medium storing a bitstream encoded by an image encoding method according to the present disclosure may be provided.

[Technical Effect]

According to the present disclosure, encoding/decoding efficiency may be improved by predicting a chroma block by using a reconstructed luma block.

According to the present disclosure, the accuracy of intra prediction may be improved by predicting a chroma block based on the linearity of a luma component and a chroma component.

According to the present disclosure, the accuracy of intra prediction may be improved by predicting a chroma block in a unit of a sub-block.

According to the present disclosure, the accuracy of intra prediction may be improved by deriving a filter parameter for chroma block prediction by using a similarity between sub-blocks.

Effects obtainable from the present disclosure are not limited to the above-mentioned effects and other unmentioned effects may be clearly understood from the following description by those having ordinary skill in the technical field to which the present disclosure pertains.

[Brief Description of Drawings]

FIG. 1 is a block diagram showing an image encoding device according to an embodiment of the present disclosure.

FIG. 2 is a block diagram showing an image decoding device according to an embodiment of the present disclosure.

FIG. 3 shows an image encoding/decoding method performed by an image encoding/decoding device according to the present disclosure.

FIGS. 4 and 5 show an example of a plurality of intra prediction modes according to the present disclosure.

FIG. 6 shows an intra prediction method based on a planar mode according to the present disclosure.

FIG. 7 shows an intra prediction method based on a DC mode according to the present disclosure.

FIG. 8 shows an intra prediction method based on a directional mode according to the present disclosure.

FIG. 9 shows a method for deriving a sample at a fractional position.

FIGS. 10 and 11 show that a tangent value for an angle is scaled 32 times per intra prediction mode.

FIG. 12 is a diagram illustrating an intra prediction aspect when a directional mode is one of mode no. 34 to mode no. 49.

FIG. 13 is a diagram for describing an example of generating a top reference sample by interpolating left reference samples.

FIG. 14 shows an example in which intra prediction is performed by using reference samples arranged in a 1D array.

FIG. 15 is a flowchart showing a method for predicting a chroma block by using a reconstructed luma block.

FIG. 16 to FIG. 18 show an example in which a luma block is downsampled.

FIG. 19 is a diagram for describing an example related to a position to which downsampling is applied.

FIG. 20 shows an example in which a prediction sample for a chroma block is derived by applying a 9-tap filter to a luma block.

FIG. 21 shows a reference region used to derive a filter coefficient.

FIG. 22 and FIG. 23 illustrate masks used to derive a gradient value.

FIG. 24 shows an example in which prediction is performed in a unit of a sub-block.

FIG. 25 shows an example in which a gradient for a sub-block is derived.

FIG. 26 shows an example for describing samples used to calculate a gradient.

[Mode for Invention]

As the present disclosure may make various changes and have several embodiments, specific embodiments will be illustrated in a drawing and described in detail. But, it is not intended to limit the present disclosure to a specific embodiment, and it should be understood that it includes all changes, equivalents or substitutes included in an idea and a technical scope for the present disclosure. A similar reference numeral was used for a similar component while describing each drawing.

A term such as first, second, etc. may be used to describe various components, but the components should not be limited by the terms. The terms are used only to distinguish one component from other components. For example, without going beyond a scope of a right of the present disclosure, a first component may be referred to as a second component and similarly, a second component may be also referred to as a first component. A term of and/or includes a combination of a plurality of relative entered items or any item of a plurality of relative entered items.

When a component is referred to as being "linked" or "connected" to other component, it should be understood that it may be directly linked or connected to that other component, but other component may exist in the middle. On the other hand, when a component is referred to as being "directly linked" or "directly connected" to other component, it should be understood that other component does not exist in the middle.

As terms used in this application are just used to describe a specific embodiment, they are not intended to limit the present disclosure. Expression of the singular includes expression of the plural unless it clearly has a different meaning contextually. In this application, it should be understood that a term such as "include" or "have", etc. is to designate the existence of characteristics, numbers, steps, motions, components, parts or their combinations entered in the specification, but is not to exclude a possibility of addition or existence of one or more other characteristics, numbers, steps, motions, components, parts or their combinations in advance.

Hereinafter, referring to the attached drawings, a desirable embodiment of the present disclosure will be described in more detail. Hereinafter, the same reference numeral is used for the same component in a drawing and an overlapping description for the same component is omitted.

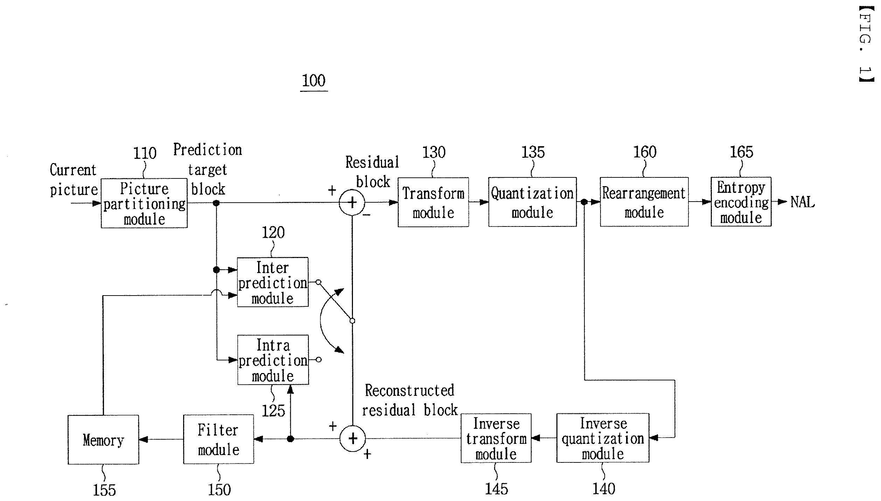

FIG. 1 is a block diagram showing an image encoding device according to an embodiment of the present disclosure.

Referring to FIG. 1, an image encoding device 100 may include a picture partitioning unit 110, prediction units 120 and 125, a transform unit 130, a quantization unit 135, a rearrangement unit 160, an entropy encoding unit 165, a dequantization unit 140, an inverse-transform unit 145, a filter unit 150, and a memory 155.

As each construction unit shown in FIG. 1 is independently shown to represent different characteristic functions in an image encoding device, it does not mean that each construction unit is constituted by separated hardware or one software unit. That is, as each construction unit is included by being enumerated as each construction unit for convenience of a description, at least two construction units of each construction unit may be combined to constitute one construction unit or one construction unit may be partitioned into a plurality of construction units to perform a function, and even an integrated embodiment and a separated embodiment of each construction unit are also included in a scope of a right of the present disclosure unless they are departing from the essence of the present disclosure.

Further, some components may be just an optional component for improving performance, not a necessary component which perform an essential function in the present disclosure. The present disclosure may be implemented by including only a construction unit necessary for implementing the essence of the present disclosure excluding a component used to just improve performance, and a structure including only a necessary component excluding an optional component used to just improve performance is also included in a scope of a right of the present disclosure.

A picture partitioning unit 110 may partition an input picture into at least one processing unit. In this case, a processing unit may be a prediction unit (PU), a transform unit (TU) or a coding unit (CU). In a picture partitioning unit 110, one picture may be partitioned into a combination of a plurality of coding units, prediction units and transform units and a picture may be encoded by selecting a combination of one coding unit, prediction unit and transform unit according to a predetermined standard (e.g., a cost function).

For example, one picture may be partitioned into a plurality of coding units. In order to partition a coding unit in a picture, a recursive tree structure such as a quad tree may be used, and a coding unit which is partitioned into other coding units by using one image or the largest coding unit as a route may be partitioned with as many child nodes as the number of partitioned coding units. A coding unit which is no longer partitioned according to a certain restriction becomes a leaf node. In other words, when it is assumed that only square partitioning is possible for one coding unit, one coding unit may be partitioned into up to four other coding units.

Hereinafter, in an embodiment of the present disclosure, a coding unit may be used as a unit for encoding or may be used as a unit for decoding.

A prediction unit may be partitioned with at least one square or rectangular shape, etc. in the same size in one coding unit or may be partitioned so that any one prediction unit of prediction units partitioned in one coding unit can have a shape and/or a size different from another prediction unit.

When a prediction unit for which intra prediction is performed based on a coding unit is generated and it is not the minimum coding unit, intra prediction may be performed without being partitioned into a plurality of prediction units NxN.

Prediction units 120 and 125 may include an inter prediction unit 120 performing inter prediction and an intra prediction unit 125 performing intra prediction. Whether to perform inter prediction or intra prediction for a coding unit may be determined and detailed information according to each prediction method (e.g., an intra prediction mode, a motion vector, a reference picture, etc.) may be determined. In this case, a processing unit that prediction is performed may be different from a processing unit that a prediction method and details are determined. For example, a prediction method, a prediction mode, etc. may be determined in a prediction unit and prediction may be performed in a transform unit. A residual value (a residual block) between a generated prediction block and an original block may be input to a transform unit 130. In addition, prediction mode information, motion vector information, etc. used for prediction may be encoded with a residual value in an entropy encoding unit 165 and may be transmitted to a decoding device. When a specific encoding mode is used, an original block may be encoded as it is and transmitted to a decoding unit without generating a prediction block through prediction units 120 or 125.

An inter prediction unit 120 may predict a prediction unit based on information on at least one picture of a previous picture or a subsequent picture of a current picture, or in some cases, may predict a prediction unit based on information on some encoded regions in a current picture. An inter prediction unit 120 may include a reference picture interpolation unit, a motion prediction unit and a motion compensation unit.

A reference picture interpolation unit may receive reference picture information from a memory 155 and generate pixel information equal to or less than an integer pixel in a reference picture. For a luma pixel, a 8-tap DCT-based interpolation filter having a different filter coefficient may be used to generate pixel information equal to or less than an integer pixel in a 1/4 pixel unit. For a chroma signal, a 4-tap DCT-based interpolation filter having a different filter coefficient may be used to generate pixel information equal to or less than an integer pixel in a 1/8 pixel unit.

A motion prediction unit may perform motion prediction based on a reference picture interpolated by a reference picture interpolation unit. As a method for calculating a motion vector, various methods such as FBMA (Full search-based Block Matching Algorithm), TSS (Three Step Search), NTS (New Three-Step Search Algorithm), etc. may be used. A motion vector may have a motion vector value in a 1/2 or 1/4 pixel unit based on an interpolated pixel. A motion prediction unit may predict a current prediction unit by varying a motion prediction method. As a motion prediction method, various methods such as a skip method, a merge method, an advanced motion vector prediction (AMVP) method, an intra block copy method, etc. may be used.

An intra prediction unit 125 may generate a prediction unit based on reference pixel information around a current block which is pixel information in a current picture. When a neighboring block in a current prediction unit is a block which performed inter prediction and accordingly, a reference pixel is a pixel which performed inter prediction, a reference pixel included in a block which performed inter prediction may be used by being replaced with reference pixel information of a surrounding block which performed intra prediction. In other words, when a reference pixel is unavailable, unavailable reference pixel information may be used by being replaced with at least one reference pixel of available reference pixels.

A prediction mode in intra prediction may have a directional prediction mode using reference pixel information according to a prediction direction and a non-directional mode not using directional information when performing prediction. A mode for predicting luma information may be different from a mode for predicting chroma information and intra prediction mode information used for predicting luma information or predicted luma signal information may be utilized to predict chroma information.

When a size of a prediction unit is the same as that of a transform unit in performing intra prediction, intra prediction for a prediction unit may be performed based on a pixel at a left position of a prediction unit, a pixel at a top-left position and a pixel at a top position. However, if a size of a prediction unit is different from a size of a transform unit when intra prediction is performed, intra prediction may be performed by using a reference pixel based on a transform unit. In addition, intra prediction using NxN partition may be used only for the minimum coding unit.

An intra prediction method may generate a prediction block after applying an adaptive intra smoothing (AIS) filter to a reference pixel according to a prediction mode. A type of an AIS filter applied to a reference pixel may be different. In order to perform an intra prediction method, an intra prediction mode in a current prediction unit may be predicted from an intra prediction mode in a prediction unit around a current prediction unit. When a prediction mode in a current prediction unit is predicted by using mode information predicted from a surrounding prediction unit, information that a prediction mode in a current prediction unit is the same as a prediction mode in a surrounding prediction unit may be transmitted by using predetermined flag information if an intra prediction mode in a current prediction unit is the same as an intra prediction mode in a surrounding prediction unit, and prediction mode information of a current block may be encoded by performing entropy encoding if a prediction mode in a current prediction unit is different from a prediction mode in a surrounding prediction unit.

In addition, a residual block may be generated which includes information on a residual value that is a difference value between a prediction unit which performed prediction based on a prediction unit generated in prediction units 120 and 125 and an original block in a prediction unit. A generated residual block may be input to a transform unit 130.

A transform unit 130 may transform an original block and a residual block including residual value information in a prediction unit generated through prediction units 120 and 125 by using a transform method such as DCT (Discrete Cosine Transform), DST (Discrete Sine Transform), KLT. Whether to apply DCT, DST or KLT to transform a residual block may be determined based on intra prediction mode information in a prediction unit used to generate a residual block.

A quantization unit 135 may quantize values transformed into a frequency domain in a transform unit 130. A quantization coefficient may be changed according to a block or importance of an image. A value calculated in a quantization unit 135 may be provided to a dequantization unit 140 and a rearrangement unit 160.

A rearrangement unit 160 may perform rearrangement of a coefficient value for a quantized residual value.

A rearrangement unit 160 may change a coefficient in a shape of a two-dimensional block into a shape of a one-dimensional vector through a coefficient scan method. For example, a rearrangement unit 160 may scan a DC coefficient to a coefficient in a highfrequency domain by using a zig-zag scan method and change it into a shape of a one-dimensional vector. According to a size of a transform unit and an intra prediction mode, instead of zig-zag scan, vertical scan where a coefficient in a shape of a two-dimensional block is scanned in a column direction or horizontal scan where a coefficient in a shape of a two-dimensional block is scanned in a row direction may be used. In other words, which scan method among zig-zag scan, vertical directional scan and horizontal directional scan will be used may be determined according to a size of a transform unit and an intra prediction mode.

An entropy encoding unit 165 may perform entropy encoding based on values calculated by a rearrangement unit 160. Entropy encoding, for example, may use various encoding methods such as exponential Golomb, CAVLC(Context-Adaptive Variable Length Coding), CABAC(Context-Adaptive Binary Arithmetic Coding).

An entropy encoding unit 165 may encode a variety of information such as residual value coefficient information and block type information in a coding unit, prediction mode information, partitioning unit information, prediction unit information and transmission unit information, motion vector information, reference frame information, block interpolation information, filtering information, etc. from a rearrangement unit 160 and prediction units 120 and 125.

An entropy encoding unit 165 may perform entropy encoding for a coefficient value in a coding unit which is input from a rearrangement unit 160.

A dequantization unit 140 and an inverse transform unit 145 dequantize values quantized in a quantization unit 135 and inversely transform values transformed in a transform unit 130. A residual value generated by a dequantization unit 140 and an inverse transform unit 145 may be combined with a prediction unit predicted by a motion prediction unit, a motion compensation unit and an intra prediction unit included in prediction units 120 and 125 to generate a reconstructed block.

A filter unit 150 may include at least one of a deblocking filter, an offset correction unit and an adaptive loop filter (ALF).

A deblocking filter may remove block distortion which is generated by a boundary between blocks in a reconstructed picture. In order to determine whether deblocking is performed, whether a deblocking filter will be applied to a current block may be determined based on a pixel included in several rows or columns included in a block. When a deblocking filter is applied to a block, a strong filter or a weak filter may be applied according to required deblocking filtering strength. In addition, in applying a deblocking filter, when horizontal filtering and vertical filtering are performed, horizontal directional filtering and vertical directional filtering may be set to be processed in parallel.

An offset correction unit may correct an offset with an original image in a unit of a pixel for an image that deblocking was performed. In order to perform offset correction for a specific picture, a region where an offset will be performed may be determined after dividing a pixel included in an image into the certain number of regions and a method in which an offset is applied to a corresponding region or a method in which an offset is applied by considering edge information of each pixel may be used.

Adaptive loop filtering (ALF) may be performed based on a value obtained by comparing a filtered reconstructed image with an original image. After a pixel included in an image is divided into predetermined groups, filtering may be discriminately performed per group by determining one filter which will be applied to a corresponding group. Information related to whether to apply ALF may be transmitted per coding unit (CU) for a luma signal and a shape and a filter coefficient of an ALF filter to be applied may vary according to each block. In addition, an ALF filter in the same shape (fixed shape) may be applied regardless of a characteristic of a block to be applied.

A memory 155 may store a reconstructed block or picture calculated through a filter unit 150 and a stored reconstructed block or picture may be provided to prediction units 120 and 125 when performing inter prediction.

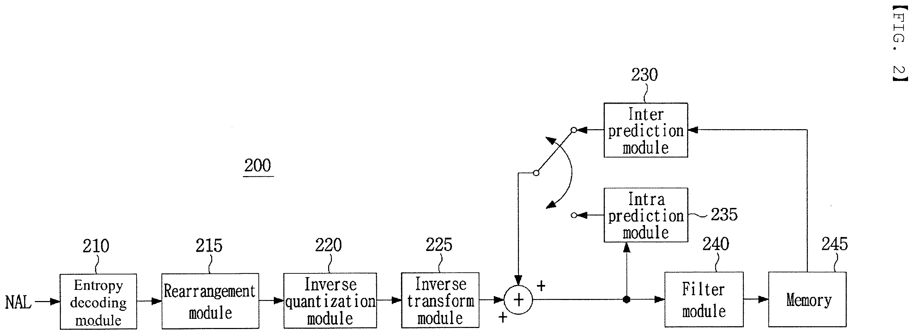

FIG. 2 is a block diagram showing an image decoding device according to an embodiment of the present disclosure.

Referring to FIG. 2, an image decoding device 200 may include an entropy decoding unit 210, a rearrangement unit 215, a dequantization unit 220, an inverse transform unit 225, prediction units 230 and 235, a filter unit 240, and a memory 245.

When an image bitstream is input from an image encoding device, an input bitstream may be decoded according to a procedure opposite to that of an image encoding device.

An entropy decoding unit 210 may perform entropy decoding according to a procedure opposite to a procedure in which entropy encoding is performed in an entropy encoding unit of an image encoding device. For example, in response to a method performed in an image encoding device, various methods such as Exponential Golomb, CAVLC (Context-Adaptive Variable Length Coding), CABAC (Context-Adaptive Binary Arithmetic Coding) may be applied.

An entropy decoding unit 210 may decode information related to intra prediction and inter prediction performed in an encoding device.

A rearrangement unit 215 may perform rearrangement based on a method that a bitstream entropy-decoded in an entropy decoding unit 210 is rearranged in an encoding unit. Coefficients expressed in a form of a one-dimensional vector may be rearranged by being reconstructed into coefficients in a form of a two-dimensional block. A rearrangement unit 215 may receive information related to coefficient scanning performed in an encoding unit and perform rearrangement through a method in which scanning is inversely performed based on scanning order performed in a corresponding encoding unit.

A dequantization unit 220 may perform dequantization based on a quantization parameter provided from an encoding device and a coefficient value of a rearranged block.

An inverse transform unit 225 may perform transform performed in a transform unit, i.e., inverse transform for DCT, DST, and KLT, i.e., inverse DCT, inverse DST and inverse KLT for a result of quantization performed in an image encoding device. Inverse transform may be performed based on a transmission unit determined in an image encoding device. In an inverse transform unit 225 of an image decoding device, a transform technique (for example, DCT, DST, KLT) may be selectively performed according to a plurality of information such as a prediction method, a size of a current block, a prediction mode, etc.

Prediction units 230 and 235 may generate a prediction block based on information related to generation of a prediction block provided from an entropy decoding unit 210 and pre-decoded block or picture information provided from a memory 245.

As described above, when a size of a prediction unit is the same as a size of a transform unit in performing intra prediction in the same manner as an operation in an image encoding device, intra prediction for a prediction unit may be performed based on a pixel at a left position of a prediction unit, a pixel at a top-left position and a pixel at a top position, but when a size of a prediction unit is different from a size of a transform unit in performing intra prediction, intra prediction may be performed by using a reference pixel based on a transform unit. In addition, intra prediction using N×N partitioning may be used only for the smallest coding unit.

Prediction units 230 and 235 may include a prediction unit determination unit, an inter prediction unit and an intra prediction unit. A prediction unit determination unit may receive a variety of information such as prediction unit information, prediction mode information of an intra prediction method, motion prediction-related information of an inter prediction method, etc. which are input from an entropy decoding unit 210, divide a prediction unit in a current coding unit and determine whether a prediction unit performs inter prediction or intra prediction. An inter prediction unit 230 may perform inter prediction for a current prediction unit based on information included in at least one picture of a previous picture or a subsequent picture of a current picture including a current prediction unit by using information necessary for inter prediction in a current prediction unit provided from an image encoding device. Alternatively, inter prediction may be performed based on information on some regions which are pre-reconstructed in a current picture including a current prediction unit.

In order to perform inter prediction, whether a motion prediction method in a prediction unit included in a corresponding coding unit is a skip mode, a merge mode, an AMVP mode, or an intra block copy mode may be determined based on a coding unit.

An intra prediction unit 235 may generate a prediction block based on pixel information in a current picture. When a prediction unit is a prediction unit which performed intra prediction, intra prediction may be performed based on intra prediction mode information in a prediction unit provided from an image encoding device. An intra prediction unit 235 may include an adaptive intra smoothing (AIS) filter, a reference pixel interpolation unit and a DC filter. As a part performing filtering on a reference pixel of a current block, an AIS filter may be applied by determining whether a filter is applied according to a prediction mode in a current prediction unit. AIS filtering may be performed for a reference pixel of a current block by using AIS filter information and a prediction mode in a prediction unit provided from an image encoding device. When a prediction mode of a current block is a mode which does not perform AIS filtering, an AIS filter may not be applied.

When a prediction mode in a prediction unit is a prediction unit which performs intra prediction based on a pixel value which interpolated a reference pixel, a reference pixel interpolation unit may interpolate a reference pixel to generate a reference pixel in a unit of a pixel equal to or less than an integer value. When a prediction mode in a current prediction unit is a prediction mode which generates a prediction block without interpolating a reference pixel, a reference pixel may not be interpolated. A DC filter may generate a prediction block through filtering when a prediction mode of a current block is a DC mode.

A reconstructed block or picture may be provided to a filter unit 240. A filter unit 240 may include a deblocking filter, an offset correction unit and an ALF.

Information on whether a deblocking filter was applied to a corresponding block or picture and information on whether a strong filter or a weak filter was applied when a deblocking filter was applied may be provided from an image encoding device. Information related to a deblocking filter provided from an image encoding device may be provided in a deblocking filter of an image decoding device and deblocking filtering for a corresponding block may be performed in an image decoding device.

An offset correction unit may perform offset correction on a reconstructed image based on offset value information, a type of offset correction, etc. applied to an image when performing encoding.

An ALF may be applied to a coding unit based on information on whether ALF is applied, ALF coefficient information, etc. provided from an encoding device. Such ALF information may be provided by being included in a specific parameter set.

A memory 245 may store a reconstructed picture or block for use as a reference picture or a reference block and provide a reconstructed picture to an output unit.

As described above, hereinafter, in an embodiment of the present disclosure, a coding unit is used as a term of a coding unit for convenience of a description, but it may be a unit which performs decoding as well as encoding.

In addition, as a current block represents a block to be encoded/decoded, it may represent a coding tree block (or a coding tree unit), a coding block (or a coding unit), a transform block (or a transform unit) or a prediction block (or a prediction unit), etc. according to an encoding/decoding step. In this specification, 'unit' may represent a base unit for performing a specific encoding/decoding process and 'block' may represent a pixel array in a predetermined size. Unless otherwise classified, 'block' and 'unit' may be used interchangeably. For example, in the afterdescribed embodiment, it may be understood that a coding block (a coding block) and a coding unit (a coding unit) are used interchangeably.

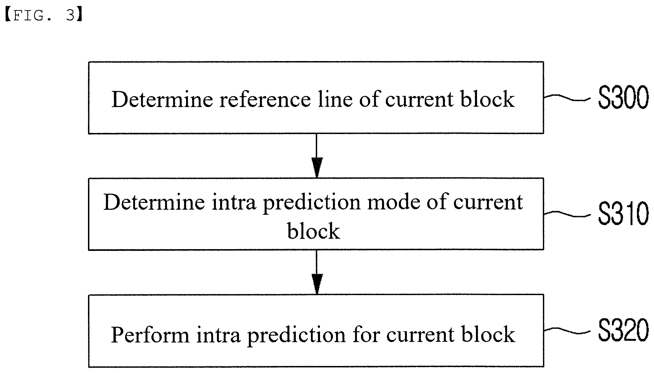

FIG. 3 shows an image encoding/decoding method performed by an image encoding/decoding device according to the present disclosure.

Referring to FIG. 3, a reference line for intra prediction of a current block may be determined S300.

A current block may use one or more of a plurality of reference line candidates pre-defined in an image encoding/decoding device as a reference line for intra prediction. Here, a plurality of pre-defined reference line candidates may include a neighboring reference line adjacent to a current block to be decoded and N non-neighboring reference lines 1-sample to N-samples away from a boundary of a current block. N may be an integer of 1, 2, 3 or more. Hereinafter, for convenience of a description, it is assumed that a plurality of reference line candidates available for a current block consist of a neighboring reference line candidate and three non-neighboring reference line candidates, but it is not limited thereto. In other words, of course, a plurality of reference line candidates available for a current block may include four or more non-neighboring reference line candidates.

An image encoding device may determine an optimal reference line candidate among a plurality of reference line candidates and encode an index for specifying it. An image decoding device may determine a reference line of a current block based on an index signaled through a bitstream. The index may specify any one of a plurality of reference line candidates. A reference line candidate specified by the index may be used as a reference line of a current block.

The number of indexes signaled to determine a reference line of a current block may be 1, 2 or more. As an example, when the number of indexes signaled above is 1, a current block may perform intra prediction by using only a single reference line candidate specified by the signaled index among a plurality of reference line candidates. Alternatively, when the number of indexes signaled above is at least two, a current block may perform intra prediction by using a plurality of reference line candidates specified by a plurality of indexes among a plurality of reference line candidates.

Referring to FIG. 3, an intra prediction mode of a current block may be determined S310.

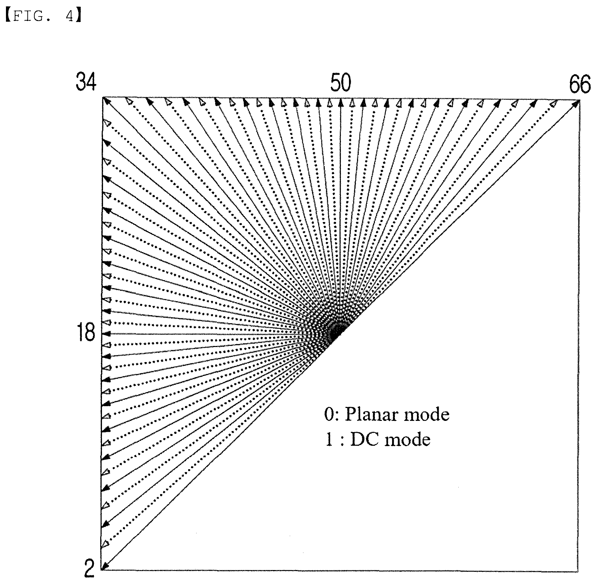

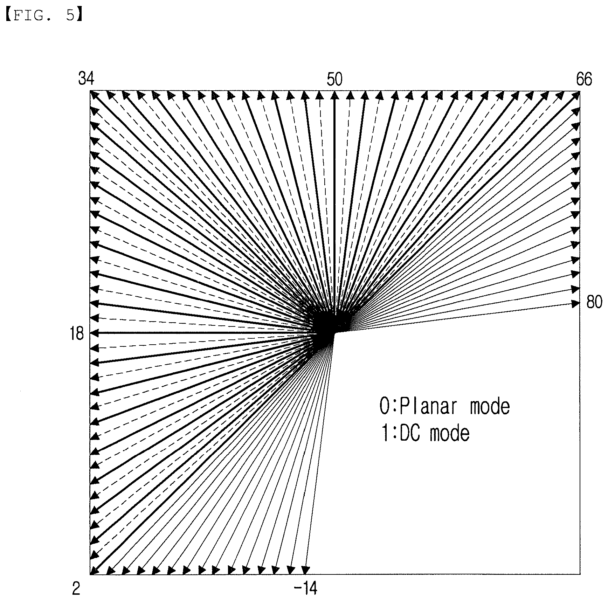

An intra prediction mode of a current block may be determined among a plurality of intra prediction modes pre-defined in an image encoding/decoding device. The plurality of pre-defined intra prediction modes are described by referring to FIGS. 4 and 5.

FIG. 4 shows an example of a plurality of intra prediction modes according to the present disclosure.

Referring to FIG. 4, a plurality of intra prediction modes pre-defined in an image encoding/decoding device may be composed of a non-directional mode and a directional mode. A non-directional mode may include at least one of a planar mode or a DC mode. A directional mode may include directional mode 2 to 66.

A directional mode may be expanded more than shown in FIG. 4. FIG. 5 shows an example in which a directional mode is expanded.

In FIG. 5, it was illustrated that mode -1 to mode -14 and mode 67 to mode 80 are added. These directional modes may be referred to as a wide-angle intra prediction mode. Whether to use a wide-angle intra prediction mode may be determined according to a shape of a current block. As an example, if a current block is a non-square block whose width is greater than a height, some directional modes (e.g., No. 2 to No. 15) may be transformed to a wide-angle intra prediction mode between No. 67 and No. 80. On the other hand, if a current block is a non-square block whose height is greater than a width, some directional modes (e.g., No. 53 to No. 66) may be transformed to a wide-angle intra prediction mode between No. -1 and No. -14.

A scope of available wide-angle intra prediction modes may be adaptively determined according to a width-to-height ratio of a current block. Table 1 shows a scope of available wide-angle intra prediction modes according to a width-to-height ratio of a current block.

[Table 1]

| Width/Height | Available wide-angle intra prediction mode range |
|---|---|
| W/H = 16 | 67~80 |
| W/H = 8 | 67~78 |
| W/H = 4 | 67~76 |
| W/H = 2 | 67~74 |
| W/H = 1 | None |
| W/H = 1/2 | -1~-8 |
| W/H = 1/4 | -1~-10 |
| W/H = 1/8 | -1~-12 |
| W/H = 1/16 | -1~-14 |

Among the plurality of intra prediction modes, K candidate modes (most probable mode, MPM) may be selected. A candidate list including a selected candidate mode may be generated. An index indicating any one of candidate modes belonging to a candidate list may be signaled. An intra prediction mode of a current block may be determined based on a candidate mode indicated by the index. As an example, a candidate mode indicated by the index may be configured as an intra prediction mode of a current block. Alternatively, an intra prediction mode of a current block may be determined based on a value of a candidate mode indicated by the index and a predetermined difference value. The difference value may be defined as a difference between a value of an intra prediction mode of the current block and a value of a candidate mode indicated by the index. The difference value may be signaled through a bitstream. Alternatively, the difference value may be a value pre-defined in an image encoding/decoding device. Alternatively, an intra prediction mode of a current block may be determined based on a flag showing whether a mode identical to an intra prediction mode of a current block exists in the candidate list. As an example, when the flag is a first value, an intra prediction mode of a current block may be determined from the candidate list. In this case, an index indicating any one of a plurality of candidate modes belonging to a candidate list may be signaled. A candidate mode indicated by the index may be configured as an intra prediction mode of a current block. On the other hand, when the flag is a second value, any one of the remaining intra prediction modes may be configured as an intra prediction mode of a current block. The remaining intra prediction modes may refer to a mode excluding a candidate mode belonging to the candidate list among a plurality of pre-defined intra prediction modes. When the flag is a second value, an index indicating any one of the remaining intra prediction modes may be signaled. An intra prediction mode indicated by the signaled index may be configured as an intra prediction mode of a current block. An intra prediction mode of a chroma block may be selected among intra prediction mode candidates of a plurality of chroma blocks. To this end, index information indicating one of intra prediction mode candidates of a chroma block may be explicitly encoded and signaled through a bitstream. Table 2 illustrates intra prediction mode candidates of a chroma block.

[Table 2]

| Index | Intra Prediction Mode Candidate for Chroma Block | | | | |
|---|---|---|---|---|---|
| | Luma Mode:0 | Luma Mode:50 | Luma Mode:18 | Luma Mode:1 | Others |
| 0 | 66 | 0 | 0 | 0 | 0 |

(continued)

| Index | Intra Prediction Mode Candidate for Chroma Block | | | | |
|---|---|---|---|---|---|
| | Luma Mode:0 | Luma Mode:50 | Luma Mode:18 | Luma Mode:1 | Others |
| 1 | 50 | 66 | 50 | 50 | 50 |
| 2 | 18 | 18 | 66 | 18 | 18 |
| 3 | 1 | 1 | 1 | 66 | 1 |
| 4 | DM | | | | |

In an example of Table 2, a direct mode (DM) refers to setting an intra prediction mode of a luma block existing at the same position as a chroma block as an intra prediction mode of a chroma block. Meanwhile, a luma block existing at the same position as a chroma block may be determined based on a position of a top-left sample or a position of a center sample of a chroma block.

As an example, if an intra prediction mode (a luma mode) of a luma block is No. 0 (a planar mode) and an index indicates No. 2, an intra prediction mode of a chroma block may be determined as a horizontal mode (No. 18). As an example, if an intra prediction mode (a luma mode) of a luma block is No. 1 (a DC mode) and an index indicates No. 0, an intra prediction mode of a chroma block may be determined as a planar mode (No. 0).

As a result, an intra prediction mode of a chroma block may be also set as one of intra prediction modes shown in FIG. 4 or FIG. 5. An intra prediction mode of a current block may be used to determine a reference line of a current block, and in this case, S310 may be performed before S300.

Referring to FIG. 3, intra prediction may be performed for a current block based on a reference line and an intra prediction mode of a current block S320.

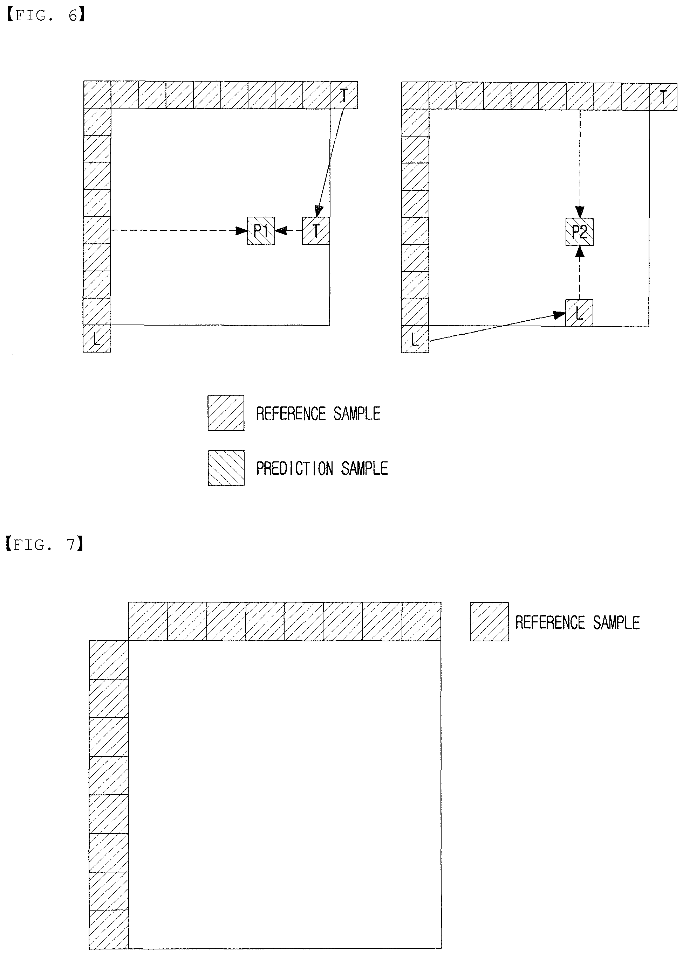

Hereinafter, an intra prediction method per intra prediction mode is described in detail by referring to FIGS. 6 to 8. However, for convenience of a description, it is assumed that a single reference line is used for intra prediction of a current block, but even when a plurality of reference lines are used, an intra prediction method described later may be applied in the same/similar manner.

FIG. 6 shows an intra prediction method based on a planar mode according to the present disclosure.

Referring to FIG. 6, T represents a reference sample position at a top-right corner of a current block and L represents a reference sample positioned at a bottom-left corner of a current block. P1 may be generated through interpolation in a horizontal direction. As an example, P1 may be generated by interpolating T with a reference sample positioned on the same horizontal line as P1. P2 may be generated through interpolation in a vertical direction. As an example, P2 may be generated by interpolating L with a reference sample positioned on the same vertical line as P2. A current sample in a current block may be predicted through a weighted sum of P1 and P2 as in Equation 3 below.

【Equation 1】

$$(\alpha \times P1 + \beta \times P2)/(\alpha + \beta)$$

In Equation 1, weight $\alpha$ and $\beta$ may be determined by considering a width and a height of a current block. According to a width and a height of a current block, weight $\alpha$ and $\beta$ may have the same value or a different value. If a width and a height of a current block are the same, weight $\alpha$ and $\beta$ may be configured to be the same and a prediction sample of a current sample may be configured as an average value of P1 and P2. When a width and a height of a current block are not the same, weight $\alpha$ and $\beta$ may have a different value. As an example, when a width is greater than a height, a smaller value may be configured to a weight corresponding to a width of a current block and a larger value may be configured to a weight corresponding to a height of a current block. Conversely, when a width is greater than a height, a larger value may be configured to a weight corresponding to a width of a current block and a smaller value may be configured to a weight corresponding to a height of a current block. Here, a weight corresponding to a width of a current block may refer to $\beta$ and a weight corresponding to a height of a current block may refer to $\alpha$.

FIG. 7 shows an intra prediction method based on a DC mode according to the present disclosure.

Referring to FIG. 7, an average value of a surrounding sample adjacent to a current block may be calculated, and a calculated average value may be configured as a prediction value of all samples in a current block. Here, a surrounding samples may include a top reference sample and a left reference sample of a current block. However, according to a shape of a current block, an average value may be calculated by using only a top reference sample or a left reference sample. As an example, when a width of a current block is greater than a height, an average value may be calculated by using only a top reference sample of a current block. Alternatively, when a ratio of a width and a height of a current block is greater than or equal to a predetermined threshold value, an average value may be calculated by using only a top reference sample of a current block. Alternatively, when a ratio of a width and a height of a current block is smaller than or equal to a predetermined threshold value, an average value may be calculated by using only a top reference sample of a current block. On the other hand, when a width of a current block is smaller than a height, an average value may be calculated by using only a left reference sample of a current block. Alternatively, when a ratio of a width and a height of a current block is smaller than or equal to a predetermined threshold value, an average value may be calculated by using only a left reference sample of a current block. Alternatively, when a ratio of a width and a height of a current block is greater than or equal to a predetermined threshold value, an average value may be calculated by using only a left reference sample of a current block.

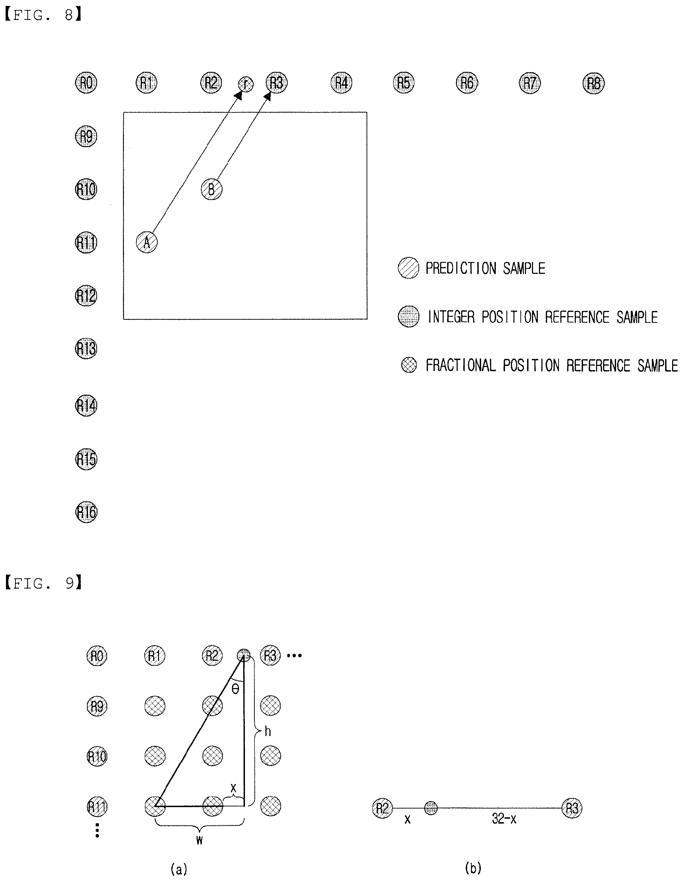

FIG. 8 shows an intra prediction method based on a directional mode according to the present disclosure.

When an intra prediction mode of a current block is a directional mode, projection may be performed to a reference line according to an angle of a corresponding directional mode. When a reference sample exists at a projected position, a corresponding reference sample may be configured as a prediction sample of a current sample. If a reference sample does not exist at a projected position, a sample corresponding to a projected position may be generated by using one or more surrounding samples neighboring a projected position. As an example, interpolation may be performed based on two or more surrounding samples neighboring bidirectionally based on a projected position to generate a sample corresponding to a projected position. Alternatively, one surrounding sample neighboring a projected position may be configured as a sample corresponding to a projected position. In this case, among a plurality of surrounding samples neighboring a projected position, a surrounding sample closest to a projected position may be used. A sample corresponding to a projected position may be configured as a prediction sample of a current sample.

Referring to FIG. 8, for current sample B, when projection is performed to a reference line according to an angle of an intra prediction mode at a corresponding position, a reference sample exists at a projected position (i.e., a reference sample at an integer position, R3). In this case, a reference sample at a projected position may be configured as a prediction sample of current sample B. For current sample A, when projection is performed to a reference line according to an angle of an intra prediction mode at a corresponding position, a reference sample (i.e., a reference sample at an integer position) does not exists at a projected position. In this case, interpolation may be performed based on surrounding samples (e.g., R2 and R3) neighboring a projected position to generate a sample (r) at a fractional position. A generated sample (r) at a fractional position may be configured as a prediction sample of current sample A.

FIG. 9 shows a method for deriving a sample at a fractional position.

In an example of FIG. 9, variable h refers to a vertical distance (i.e., a vertical distance) from a position of prediction sample A to a reference sample line, and variable w refers to a horizontal distance (i.e., a horizontal distance) from a position of prediction sample A to a fractional position sample. In addition, variable $\theta$ refers to an angle which is predefined according to directivity of an intra prediction mode, and variable x refers to a fractional position.

Variable w may be derived as in Equation 2 below.

【Equation 2】

$$w = h \tan\theta$$

Then, if an integer position is removed from variable w, finally, a fractional position may be derived.

A fractional position sample may be generated by interpolating adjacent integer position reference samples. As an example, a fractional position reference sample at a x position may be generated by interpolating integer position reference sample R2 and integer position reference sample R3.

In deriving a fractional position sample, a scaling factor may be used to avoid a real number operation. As an example, when scaling factor f is set as 32, as in an example shown in FIG. 8(b), a distance between neighboring integer reference samples may be set as 32, not 1.

In addition, a tangent value for angle $\theta$ determined according to directivity of an intra prediction mode may be also scaled up by using the same scaling factor (e.g., 32).

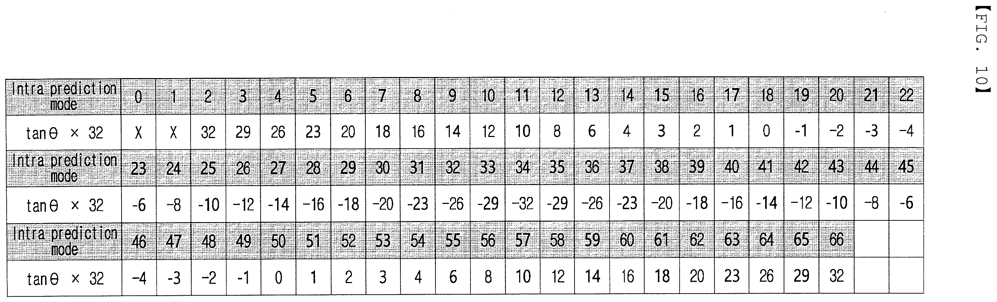

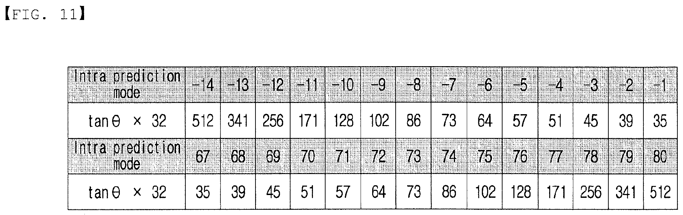

FIGS. 10 and 11 show that a tangent value for an angle is scaled 32 times per intra prediction mode.

FIG. 10 shows a scaled result of a tangent value for a nonwide angle intra prediction mode, and FIG. 11 shows a scaled result of a tangent value for a wide angle intra prediction mode.

If a tangent value ($\tan\theta$) for an angle value of an intra prediction mode is positive, intra prediction may be performed by using only one of reference samples belonging to a top line of a current block (i.e., top reference samples) or reference samples belonging to a left line of a current block (i.e., left reference samples). Meanwhile, when a tangent value for an angle value of an intra prediction mode is negative, both reference samples at a top position and reference samples at a left position are used.

In this case, in order to simplify implementation, left reference samples may be projected to the top or may be projected to the left to arrange reference samples in a 1D array form, and reference samples in a 1D array form may be used to perform intra prediction.

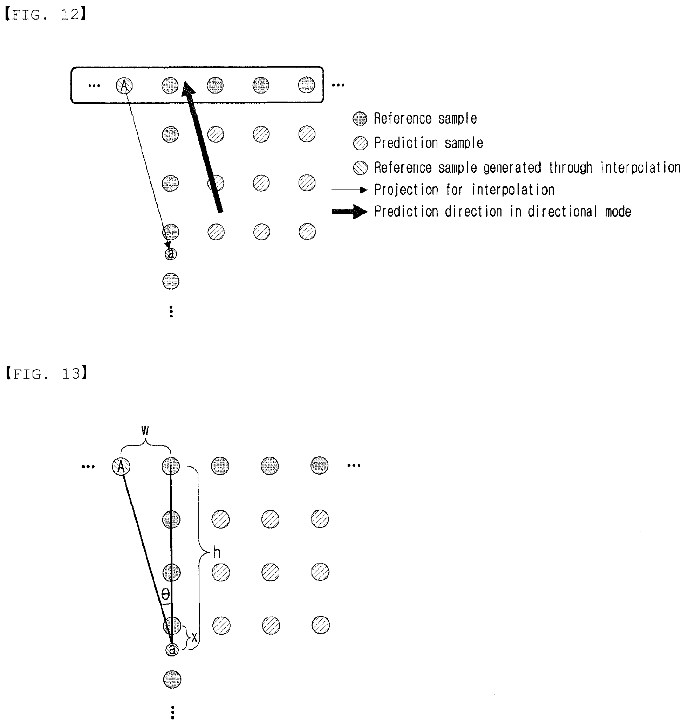

FIG. 12 is a diagram illustrating an intra prediction aspect when a directional mode is one of mode no. 34 to mode no. 49.

When an intra prediction mode of a current block is one of mode no. 34 to mode no. 49, intra prediction is performed by using not only top reference samples of a current block, but also left reference samples. In this case, as in an example shown in FIG. 12, a reference sample of a top line may be generated by copying a reference sample at a left position of a current block to a position of a top line or by interpolating reference samples at a left position.

As an example, when a reference sample for position A on the top of a current block is obtained, considering directivity of an intra prediction mode of a current block, projection may be performed on a left line of a current block at position A on a top line. If a projected position is called a, a value corresponding to position a may be copied or a fractional position value corresponding to a may be generated and set as a value of position A. As an example, if position a is an integer position, a value of position A may be generated by copying an integer position reference sample. On the other hand, when position a is a fractional position, a reference sample at a top position of position a and a reference sample at a bottom position of position a may be interpolated and an interpolated value may be set as a value of position A. Meanwhile, at position A on the top of a current block, a direction projected to a left line of a current block may be parallel to and opposite to a direction of an intra prediction mode of a current block.

FIG. 13 is a diagram for describing an example of generating a top reference sample by interpolating left reference samples.

In FIG. 13, variable h represents a horizontal distance between position A on a top line and position a on a left line. Variable w represents a vertical distance between position A on a top line and position a on a left line. In addition, variable $\theta$ refers to an angle predefined according to directivity of an intra prediction mode, and variable x refers to a fractional position.

Variable h may be derived as in Equation 3 below.

【Equation 3】

$$h = w/\tan\theta$$

Afterwards, if an integer position is removed from variable h, a fractional position may be derived finally.

In deriving a fractional position sample, a scaling factor may be used to avoid a real number operation. As an example, a tangent value for variable $\theta$ may be scaled by using scaling factor f1. Here, since a direction projected to a left line is parallel and opposite to a directional prediction mode, a scaled tangent value shown in FIGS. 10 and 11 may be used.

When scaling factor f1 is applied, Equation 3 may be modified and used as in Equation 4 below.

【Equation 4】

$$h = (w * f1 * f2)/(f1 * \tan\theta)$$

In the same way as above, a 1D reference sample array may be configured only with reference samples belonging to a top line. As a result, intra prediction for a current block may be performed by using only top reference samples composed of 1D arrays.

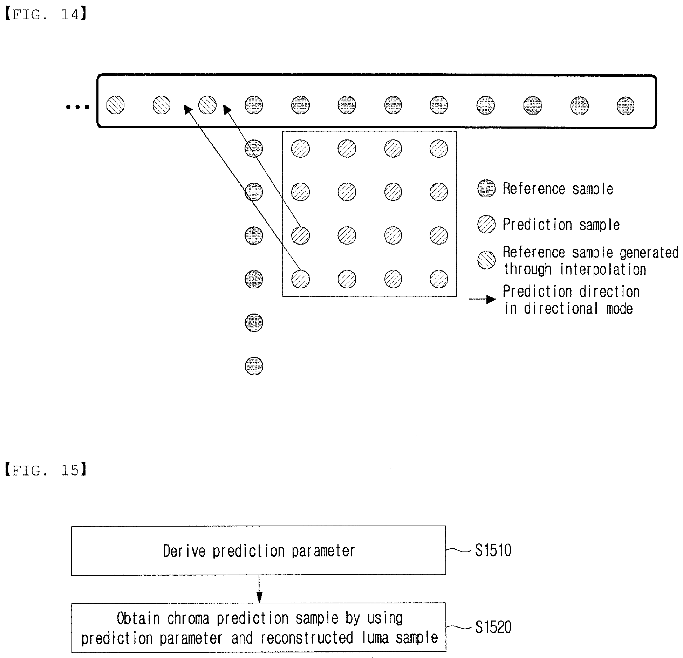

FIG. 14 shows an example in which intra prediction is performed by using reference samples arranged in a 1D array.

As in an example shown in FIG. 14, left reference samples may be projected to generate top reference samples, and accordingly, prediction samples of a current block may be obtained by using only reference samples belonging to a top line.

Contrary to what is shown in FIGS. 12 and 14, top reference sample may be projected to a left line to configure a 1D reference sample array only with reference samples belonging to a left line. Specifically, for mode no. 19 to no. 33 of directional modes in which a tangent value (tan$\theta$) for an angle of a directional mode is negative, reference samples belonging to a top line may be projected to a left line to generate a left reference sample.

A reconstructed luma block may be used to perform prediction on a chroma block. As above, a prediction model using a different color component may be referred to as a cross-component linear model (CCLM). When a CCLM is applied, a process of deriving an intra prediction mode of a chroma block may be omitted based on an intra prediction mode of a luma block.

FIG. 15 is a flowchart showing a method for predicting a chroma block by using a reconstructed luma block.

Referring to FIG. 15, first, for prediction for a chroma block, a prediction parameter may be derived S1510. In this case, a prediction parameter may be derived in a different way according to an image format of a picture. As an image format represents a chroma subsampling rate, it may be determined as one of 4:4:4, 4:2:2 or 4:2:0.

When an image format is not 4:4:4, a luma block is downsampled and adjusted to have the same size as a chroma block.

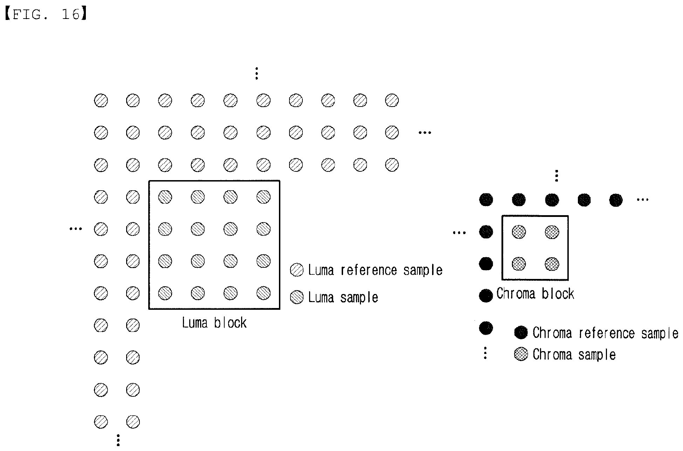

FIG. 16 to FIG. 18 show an example in which a luma block is downsampled.

For convenience of a description, it is assumed that an image format is 4:2:0.

When an image format is 4:2:0, as in an example shown in FIG. 16, a size of a chroma block corresponding to a 4x4-sized luma block is 2x2. In this case, a downsampling filter may be applied to a luma block to reduce a 4x4-sized luma block to a size of 2x2. Equation 5 below shows an application aspect of a downsampling filter.

$$Downsampled\_Luma[w][h]=(Luma[2*w][2*h\text{-}1]+Luma[2*w\text{-}1][2*h]+ \quad 4*Luma[2*w][2*h]+Luma[2*w+1][2*h]+Luma[2*w][2*h+1]+4)\gg3 \qquad \text{[Equation 5]}$$

In Equation 5, Downsampled_Luma refers to a sample value in a downsampled luma block, and Luma refers to a value of a luma sample before downsampling. For example, Luma[0] [0] may represent a position of a top-left sample in a luma block before downsampling. Since a size of a downsampled luma block is 2x2, variables w and h representing a coordinate of a sample may have a value from 0 to 1, respectively.

When a downsampling filter according to Equation 5 is applied, a value of a downsampled luma sample may be obtained by applying a cross-shaped downsampling filter to luma samples. As an example, a value of a downsampled luma sample at a position of (0, 0) may be obtained by applying a downsampling filter to a luma sample at a position of (0, 0), a top luma sample at the position of (0, 0), a left luma sample at the position of (0, 0), a bottom luma sample at the position of (0, 0) and a right luma sample at the position of (0, 0).

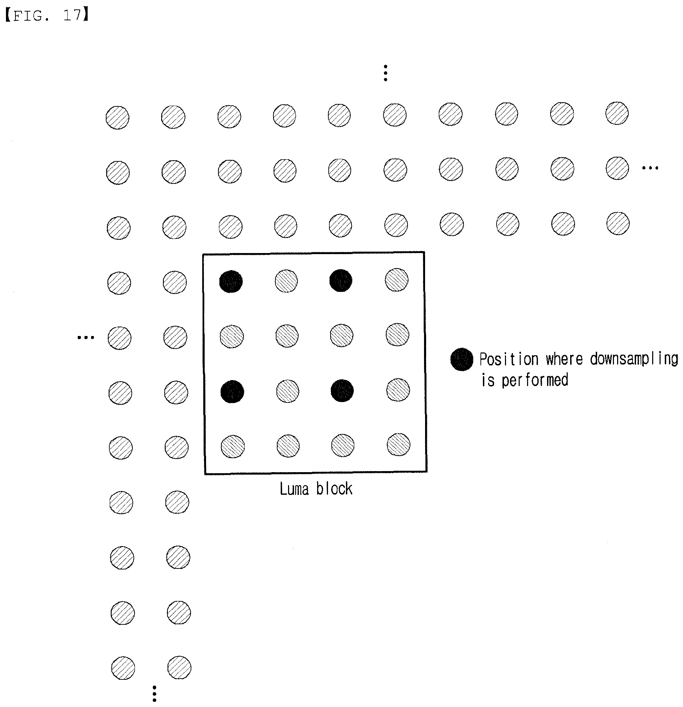

A downsampling filter in a different shape from that shown in FIG. 17 may also be applied. As an example, a 1D filter, a rectangular filter or a square filter may be applied to obtain a downsampled luma sample. A 1D filter may have a size of 1x3 or 3x1, a rectangular filter may have a size of 2x3 or 3x2 and a square filter may have a size of 2x2 or 3x2.

A shape of a filter may be predefined in an encoder and a decoder.

Alternatively, a shape of a filter may be adaptively determined based on at least one of a size/a shape of a current block, an intra prediction mode applied to a luma block, whether a position of a chroma sample matches a position of a luma sample or an image format.

Alternatively, information indicating one of a plurality of filter candidates may be encoded and signaled.

Alternatively, a filter type may be different according to a downsampling position. As an example, a 1D filter or a rectangular filter may be applied to a luma sample positioned at a boundary of a luma block, while a cross-shaped filter may be applied to a luma sample not positioned at a boundary of a luma block.

As shown in FIG. 17, a downsampling filter may be applied to a position where both a x-axis coordinate and a y-axis coordinate are an even number.

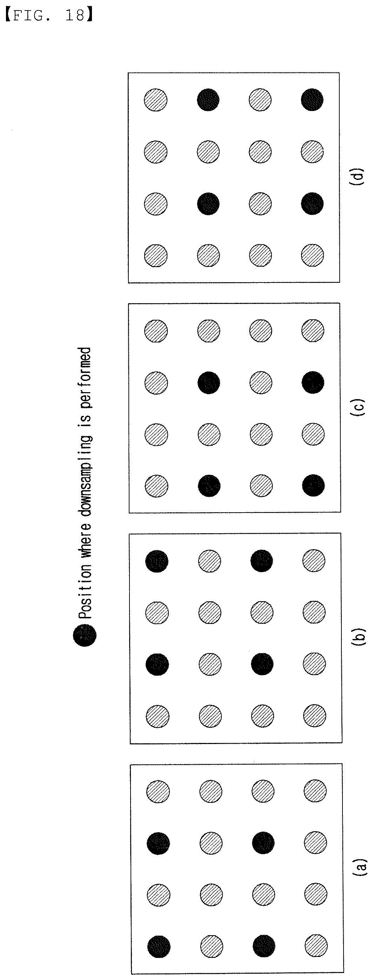

An application position of a downsampling filter may be set differently from that shown in FIG. 17. FIG. 18 shows various examples for an application position of a downsampling filter.

After predefining a plurality of candidates related to a downsampling application position, one of a plurality of candidates may be selected. As an example, after defining examples of FIG. 18(a) to (d) as a plurality of candidates, index information indicating one of a plurality of examples may be encoded and signaled.

Alternatively, one of a plurality of candidates may be selected based on whether a position of a chroma sample matches a position of a luma sample.

A downsampling filter may also be applied to reference samples around a luma block. Here, a reference sample may represent a pre-reconstructed sample. Specifically, a downsampled luma reference sample may be obtained by applying a downsampling filter to at least one of a top reference region adjacent to the top of a luma block or a left reference region adjacent to the left.

The same number of downsampled luma reference samples as the number of reference samples included in a reference region of a chroma block may be obtained.

Meanwhile, a reference region of a luma block may be referred to as a luma reference region and a reference region of a chroma block may be referred to as a chroma reference region.

An inter-component prediction mode may be divided into a top inter-component prediction mode, a left inter-component prediction mode and a top and left inter-component prediction mode according to a configuration of a reference region. When a top inter-component prediction mode is selected, a reference region of each of a luma block and a chroma block is composed of only top reference regions. When a left inter-component prediction mode is selected, a reference region of each of a luma block and a chroma block is composed of only left reference regions. When a top and left inter-component prediction mode is selected, a reference region of each of a luma block and a chroma block may be composed of a top reference region and a left reference region.

Information indicating which of a top inter-component prediction mode, a left inter-component prediction mode and a top and left inter-component prediction mode is applied to a current block may be explicitly encoded and signaled. As an example, index information indicating a type of an inter-component prediction mode may be encoded and signaled.

Alternatively, one of a top inter-component prediction mode, a left inter-component prediction mode and a top and left inter-component prediction mode may be selected based on at least one of a size/a shape of a current block, whether a current block is adjacent to a CTU or a picture boundary or an intra prediction mode applied to a luma block.

For convenience of a description, in an embodiment described below, it is assumed that a reference region of each of a luma block and a chroma block includes a top reference region and a left reference region.

A shape of a downsampling filter applied to a reference region of a luma block may be the same as a downsampling filter applied to a luma block. Alternatively, a shape of a downsampling filter applied to a reference region of a luma block may be different from a downsampling filter applied to a luma block. Alternatively, a shape of a downsampling filter applied to a top reference region of a luma block may be different from a shape of a downsampling filter applied to a left reference region of a luma block.

Meanwhile, a position where downsampling is applied within a reference region may be predefined in an encoder and a decoder.

As another example, a decoder may determine by itself a position where downsampling is applied within a reference region in the same manner as an encoder.

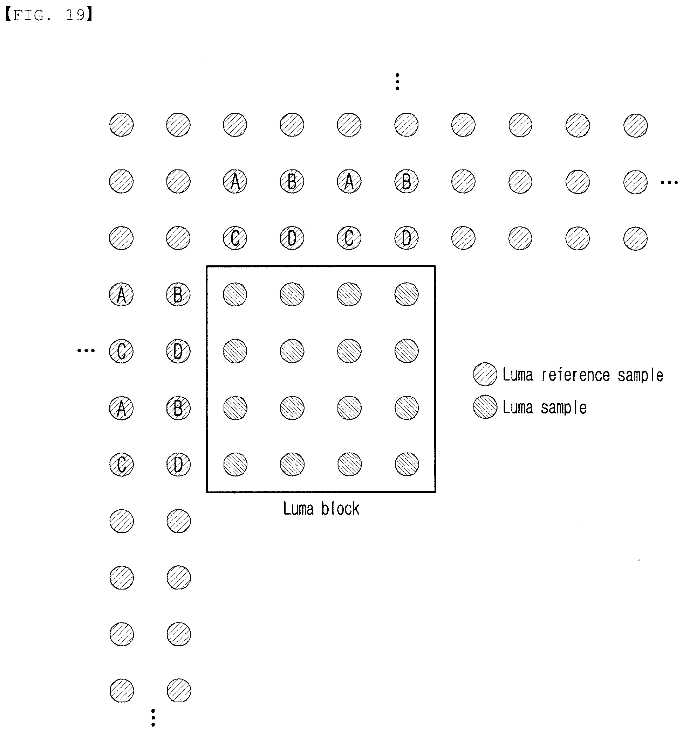

FIG. 19 is a diagram for describing an example related to a position to which downsampling is applied.

When an image format is 4:2:0, a 1x1-sized chroma block corresponds to a 2x2-sized luma block. Accordingly, a downsampled luma reference sample corresponding to a chroma reference sample may be derived by applying a downsampling filter to a position of one of the four luma reference samples.

When four luma reference samples corresponding to one chroma reference sample are A to D, downsampling may be performed on each of the positions A to D in a reference region and a cost for each position may be calculated. Here, a cost for a specific position may be derived based on the sum of differences between a downsampled luma reference sample obtained by applying a downsampling filter centered on a corresponding position and a chroma reference sample corresponding to a corresponding position or the sum of absolute values of the differences. As such, a cost derived based on the sum of absolute values of a difference may also be called a SAD (Sum of Difference).

Afterwards, a position with the lowest cost may be determined as an optimal position, and a process of deriving a prediction parameter described below may be performed by using downsampled luma samples at an optimal position.

Alternatively, information indicating one of a plurality of positions to which a downsampling filter may be applied may be encoded and signaled. As an example, in an example shown in FIG. 19, an index indicating one of the positions A to D may be encoded and signaled. To this end, an encoder may obtain a prediction parameter for each of a plurality of positions to which a downsampling filter may be applied and may encode and signal an index indicating a position used to derive an optimal prediction parameter among a plurality of prediction parameters. Here, an optimal prediction parameter may be derived by a cost of each prediction parameter or Rate Distortion Optimization (RDO).

Meanwhile, determining an optimal downsampling application position within a top reference region may be independent of determining an optimal downsampling application position within a left reference region. In this case, an optimal downsampling application position within a top reference region may be different from an optimal downsampling application position within a left reference region.

A prediction parameter for a chroma block may be derived by using downsampled luma reference samples and reference samples of a chroma block. A prediction parameter may include weight $\alpha$ and offset $\beta$. A prediction parameter may be derived by using a least square method, etc.

Alternatively, weight $\alpha$ and offset $\beta$ may be derived based on the maximum value and the minimum value of downsampled luma reference samples and the linearity of the maximum value and the minimum value of chroma reference samples.

In this case, a prediction parameter may also be derived by using only chroma reference samples at a predefined position and downsampled luma reference samples corresponding thereto. In this case, a process of deriving a prediction parameter may be simplified to reduce complexity in an encoder and a decoder. As an example, a prediction parameter may be derived by using chroma reference samples at a position illustrated in Equation 6 below.

【Equation 6】

$$(-1,W/4),(-1,3W/4),(H/4,-1),(3H/4,-1)$$

In the example, W and H represent a width and a height of a chroma block, respectively. A prediction parameter may be derived by using four chroma reference samples according to the example and four downsampled luma reference samples corresponding thereto.

A prediction parameter may also be obtained by using reference samples at a position different from that in the example. As an example, a position of reference samples may be determined as in Equation 7 and Equation 8 below.

【Equation 7】

$$(-1,W/4),(-1,3W/4),(-1,5W/4),(-1,7W/4)$$

【Equation 8】

$$(H/4,-1),(3H/4,-1),(5H/4,-1),(7H/4,-1)$$

After predefining a plurality of candidates for a position of reference samples, one of a plurality of candidates may be selected. As an example, after each example in Equation 6 to Equation 8 listed above is set as a position candidate, reference samples may be selected according to one of a plurality of position candidates.

Information for selecting one of a plurality of position candidates may be encoded and signaled. As an example, an index indicating one of a plurality of position candidates may be encoded and signaled.

Alternatively, one of a plurality of position candidates may be adaptively selected based on at least one of a size/a shape of a current block, a color format or whether a position of a chroma sample matches a position of a luma sample.

As an example, when a current block is square, a prediction parameter may be derived by using a position candidate in Equation 6. On the other hand, when a current block is non-square, a prediction parameter may be derived by using a position candidate in Equation 7 or Equation 8. As an example, when a current block has a non-square shape that a width is greater than a height, a position candidate in Equation 7 may be used, and when a current block has a non-square shape that a height is greater than a width, a position candidate in Equation 8 may be used.

Once a prediction parameter is derived, a prediction sample of a chroma block may be obtained based on a downsampled luma sample S1520. As an example, a prediction sample of a chroma block may be obtained according to Equation 9 below.

【Equation 9】

$$PredChroma[w][h]=\alpha\times Downsampled\_luma[w][h]+\beta,$$
$$0\leq w<W,0\leq h<H$$

In Equation 9, PredChroma represents a prediction sample of a chroma block and Downsampled_Luma represents a downsampled luma sample at a position corresponding to a chroma prediction sample.

Meanwhile, when an image format is 4:4:4, the above-described downsampling process may be omitted. In other words, when an image format is 4:4:4, a process of performing downsampling on reconstructed samples in a luma block and a process of performing downsampling on reference samples of a luma block may be omitted.

As another example, regardless of an image format, a downsampling filter may not be applied to a reference region of a luma block. In other words, in deriving a prediction parameter, instead of using the minimum value and the maximum value among the downsampled luma reference samples, the minimum value and the maximum value among the luma reference samples may be used.

A prediction sample for a chroma prediction block may be derived by using a filter composed of more filter coefficients than those in Equation 9.

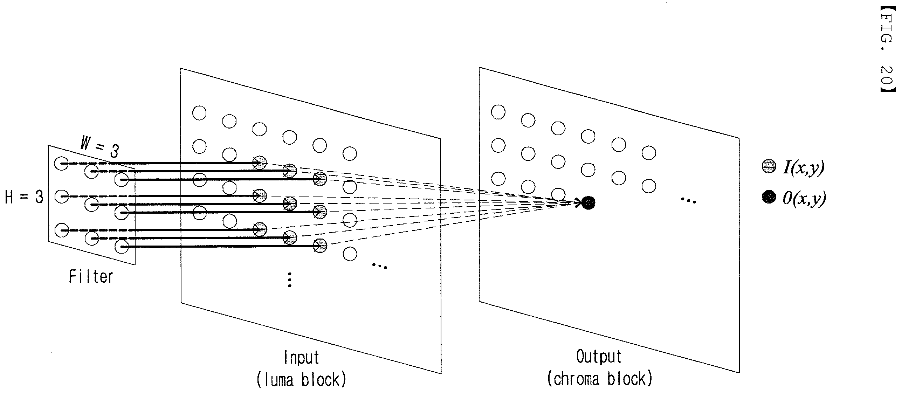

FIG. 20 shows an example in which a prediction sample for a chroma block is derived by applying a 9-tap filter to a luma block.

In FIG. 20, it was assumed that a 3x3-sized square filter is applied to a luma block. In this case, a prediction sample output through a filter may be derived as in Equation 10 below.

【Equation 10】

$$O(x,y) = \sum_{j=-H/2}^{H/2} \sum_{i=-W/2}^{W/2} f(i,j) \cdot I(x+i, y+j)$$

In Equation 10, (x, y) represents a position of a prediction sample to be generated and (i, j) represents a position of a filter coefficient. In addition, W and H represent a horizontal length and a vertical length of a filter, respectively.

Meanwhile, in Equation 10, when a value of H/2 or W/2 is a real number, not an integer, it is processed as an integer by a lowering operation. As an example, as in an example shown in FIG. 20, when a 3x3-sized filter is applied, a value of W and H is 3, respectively. In this case, a value of W/2 and H/2 is 1.5, not an integer. Through a lowering operation, a value of H/2 and W/2 may be processed as 1. Similarly, -1.5 may be processed as -1 through a lowering operation.

In Equation 10, I refers to an input value. Here, an input value may be a reconstructed sample in a downsampled luma block that exists at the same position as a sample to be predicted in a chroma block.

In Equation 10, O refers to an output value, specifically, a value of a prediction sample in a chroma block.

Meanwhile, in FIG. 20, it was assumed that a filter shape is a 3x3-sized square shape. However, a filter in a shape different from that shown may be used to derive a prediction sample of a chroma block. As an example, a prediction sample for a chroma block may be derived by using a cross-shaped filter that a width and a height are the same or a square filter that a width and a height are different such as a 3x2-sized square filter or a 2x3-sized square filter, etc. Meanwhile, when a cross-shaped filter is applied, the maximum width and the maximum height of a filter may be set as 3, 4 or 5, etc.

In Equation 10, f(i, j) represents a filter coefficient. A filter coefficient may be derived by using a pre-reconstructed region adjacent to a chroma block and a pre-reconstructed region adjacent to a luma block. Here, a pre-reconstructed region may refer to a reference region.

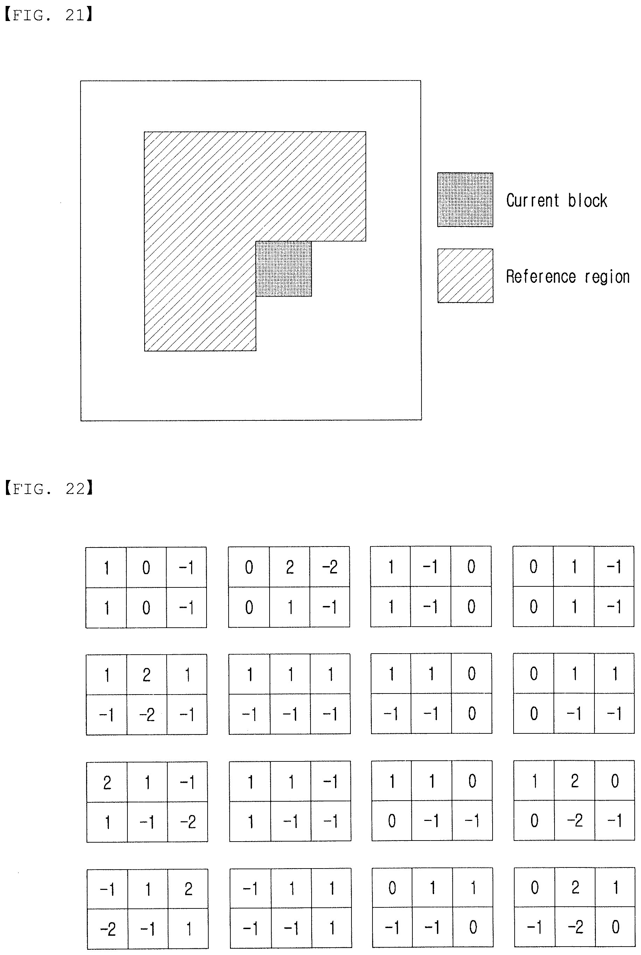

FIG. 21 shows a reference region used to derive a filter coefficient.

A current block may represent a luma block or a chroma block according to a color attribute.

As in an example shown in FIG. 21, a reference region may include a top reference region adjacent to the top of a current block and a left reference region adjacent to the left of a current block.

Alternatively, unlike an example shown in FIG. 21, a filter coefficient may be derived by using only a top reference region or only a current left reference region.

In order to derive a filter coefficient, a process of adjusting resolution for a luma reference region to be the same as resolution for a chroma reference region may be performed. Specifically, downsampling for a luma reference region may be performed to adjust a size of a luma reference region to be the same as a size of a chroma reference region.

Meanwhile, when a chroma format is 4:4:4, a resolution adjustment process described above may be omitted.

Afterwards, a filter coefficient may be derived by using reconstructed samples (or downsampled reconstructed samples) in a luma reference region with adjusted resolution and reconstructed samples in a chroma reference region. Specifically, based on Equation 11 and Equation 12, a filter coefficient that minimizes a difference between reconstructed samples in a luma reference region and reconstructed samples in a chroma reference region may be derived.

【Equation 11】

$$f(i,j) = argmin_{f(i,j)} \left[ \sum_{x,y \in S} \{C(x,y) - L'(x,y)\}^2 \right]$$

【Equation 12】

$$L'(x,y) = \sum_{j=\frac{-H}{2}}^{\frac{H}{2}} \sum_{i=\frac{-W}{2}}^{\frac{W}{2}} f(i,j) \cdot L(x+i, y+i)$$

In Equation 11 above, S refers to a luma reference region and a chroma reference region with adjusted resolution. C(x, y) represents a chroma reference sample within a chroma reference region. L(x, y) represents a luma reference sample (or a downsampled luma reference sample) within a luma reference region.

Regression analysis may be used to derive a filter coefficient based on Equation 11 and Equation 12. As an example, a least mean square method may be used.

Meanwhile, instead of using reconstructed samples within a reference region, a filter coefficient may be derived by using a feature value derived based on reconstructed samples. As an example, a filter coefficient may be derived by using at least one of a gradient value derived based on reconstructed samples belonging to a luma reference region or a gradient value derived based on reconstructed samples belonging to a chroma reference region.

As an example, a filter coefficient may be derived to ensure that a difference between a feature value of each reconstructed sample in a reference region of a luma block and each reconstructed sample in a reference region of a chroma block is minimized. As an example, Equation 12 may be changed to Equation 13 below to derive variable L' (x, y), and variable L' (x, y) may be input into Equation 11 to derive a filter coefficient.

【Equation 13】

$$L'(x,y) = \sum_{j=\frac{-H}{2}}^{\frac{H}{2}} \sum_{i=\frac{-W}{2}}^{\frac{W}{2}} f(i,j) \cdot G(x+i, y+i)$$

In Equation 13 above, G(x, y) represents a gradient value at a position of (x, y) within a luma reference region.

Meanwhile, even when deriving a prediction sample for a chroma block, instead of a luma reconstructed sample, a gradient of a luma reconstructed sample may be input. As an example, Euation 10 may be changed to Equation 14 below to derive a chroma prediction sample.

【Equation 14】

$$O(x,y) = \sum_{j=-H/2}^{H/2} \sum_{i=-W/2}^{W/2} f(i,j) \cdot G(x+i, y+j)$$

A gradient value may be derived by applying a mask to a reconstructed sample and reconstructed samples around the reconstructed sample.

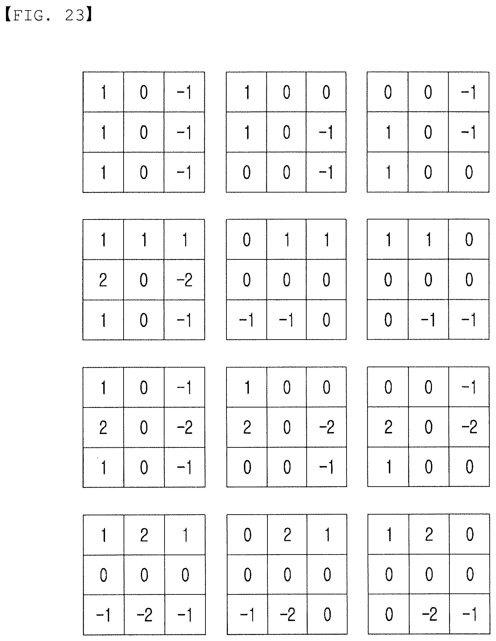

FIG. 22 and FIG. 23 illustrate masks used to derive a gradient value.

FIG. 22 illustrates non-square masks and FIG. 23 illustrates square masks.

At least one of the masks shown in FIG. 22 or FIG. 23 may be applied to a reconstructed sample and reconstructed samples around the reconstructed sample to obtain a gradient value for the reconstructed sample.

As an example, a gradient value for the reconstructed sample may be derived by performing convolution based on at least one of the masks shown in FIG. 22 or FIG. 23 on a reconstructed sample in a luma reference region where resolution is adjusted to be the same as that of a chroma reference region.

Meanwhile, a mask used to derive a gradient value may be predefined in an encoder and a decoder.

Alternatively, according to a color format or a filter shape, a mask used to derive a gradient value among a plurality of masks may be adaptively determined. As an example, when a 3x3-shaped filter is applied to derive a chroma prediction sample, one of the square masks shown in FIG. 23 may be used to derive a gradient value. On the other hand, when a 3x2-shaped filter is applied to derive a chroma prediction sample, one of the non-square masks shown in FIG. 22 may be used to derive a gradient value.

Alternatively, according to a position of a luma reconstructed sample, a mask used to derive a gradient value among a plurality of masks may be adaptively determined. As an example, when a reference sample is included in a left reference region, a 2x3-sized non-square mask may be applied. On the other hand, when a reference sample is included in a top reference region, a 3x2-sized non-square mask may be applied.

Alternatively, an index indicating a mask applied to a current block among a plurality of masks may be explicitly encoded and signaled.

As another example, after applying a plurality of masks, a gradient of a luma reconstructed sample may be derived through an average or a weighted sum operation for output values of each of a plurality of masks.

As an example, for a luma reconstructed sample at a position of (x, y), a first mask composed of [{1, 0, -1}, {1, 0, -1}] and a second mask composed of [{1, 1, 1}, {-1, -1, -1}] may be applied. Afterwards, a result of an average operation or a weighted sum operation between a first result value output through a first mask and a second result value output through a second mask may be set as a gradient value for a luma reconstructed sample.

Afterwards, a prediction block for a chroma block may be obtained by using a derived filter coefficient.

Meanwhile, in Equation 10, it was illustrated that a plurality of input values, i.e., a plurality of luma reconstructed samples are input once each in order to obtain one output value, i.e., one chroma prediction sample. In other words, it was illustrated that in order to obtain a chroma prediction sample at a position of (x, y), a filter is used in which a luma reconstructed sample at a position of (x, y) and reconstructed samples around the luma reconstructed sample are input once each.

As another example, in order to give a high correlation to an input value at a specific position, a filter may be applied to ensure that an input value at a specific position is input multiple times. As an example, Equation 10 may be changed to Equation 15 below to obtain a prediction sample for a chroma block.

【Equation 15】

$$O(x,y) = \left\{ \sum_{j=\frac{-H}{2}}^{\frac{H}{2}} \sum_{i=\frac{-W}{2}}^{\frac{W}{2}} f(i,j) \cdot I(x+i, y+j) \right\} + \sum_{n=0}^{N-1} \{ \alpha_n \cdot I(x+x_n, y+y_n)^{n+2} \} + w_N \cdot C$$

In this case, Equation 12 for deriving a filter coefficient may be changed as in Equation 16 below.

【Equation 16】

$$L'^{(x,y)} = \left\{ \sum_{j=\frac{-H}{2}}^{\frac{H}{2}} \sum_{i=\frac{-W}{2}}^{\frac{W}{2}} f(i,j) \cdot L(x+i, y+i) \right\} + \sum_{n=0}^{N-1} \{ \alpha_n \cdot I(x+x_n, y+y_n)^{n+2} \} + w_N \cdot C$$

In Equation 15 above, C represents an offset. C may be an integer including 0. An offset may be predefined in an encoder and a decoder. Alternatively, an offset may be determined based on a bit depth. As an example, an offset may be an intermediate value in a range that may be expressed by a bit depth.

N represents the number of input values with a high priority. In other words, N represents the number of input values input multiple times. $a_n$ is an additional filter parameter and $x_n$ and $y_n$ are a variable for determining a position where a high priority is given.

As an example, when a value of N is 1 and a value of $x_0$ and $y_0$ is 0, respectively, it may be understood that a high priority is given to an input value at the same position as an output value, i.e., a luma reconstructed sample at the same position as a chroma prediction sample.

A value of at least one of N or $(x_n, y_n)$ may be predefined in an encoder and a decoder. Alternatively, information about a value of at least one of N or $(x_n, y_n)$ may be explicitly encoded and signaled.

Alternatively, according to a filter shape, a value of at least one of N or $(x_n, y_n)$ may be adaptively determined. As an example, when a filter has a 3x2-sized non-square shape, N may be set as 2. On the other hand, when a filter has a 3x3-sized square shape, N may be set as 1.

After partitioning a current block into a plurality of sub-blocks, prediction may be performed in a unit of a sub-block. Here, a current block may represent a luma block and a chroma block according to a color component. For convenience of a description, a sub-block included in a current block may be referred to as a luma sub-block and a chroma sub-block according to a color component and a sub-block included in a reference region may be referred to as a reference sub-block.

Specifically, a chroma prediction sample for a sub-block in a current block may be derived by using a filter coefficient derived based on a reference sub-block having the same feature a sub-block in a current block among a plurality of reference sub-blocks included in a reference region of a current block. To this end, a process of allocating one of a plurality of classes may be performed for each sub-block in a reference region and a current block.

Meanwhile, information indicating whether to perform prediction in a unit of a sub-block may be encoded and signaled. As an example, the information may be a 1-bit flag.

Whether it is allowed to perform prediction in a unit of a sub-block may be determined according to a color format or a size or a shape of a current block. As an example, it may be allowed to perform prediction in a unit of a sub-block only when a size of a current block is greater than 8X8 or 16X16. The flag may be signaled only when it is allowed to perform prediction in a unit of a sub-block.

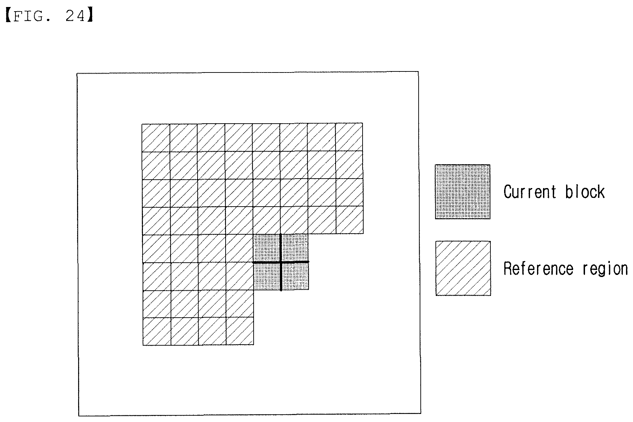

FIG. 24 shows an example in which prediction is performed in a unit of a sub-block.

A current block and a reference region of a current block may be partitioned into M X N-sized sub-blocks.

In this case, a size of a sub-block may be predefined in an encoder and a decoder. Alternatively, a size and/or a shape of a sub-block may be adaptively determined according to a size and/or a shape of a current block. Alternatively, information representing a size of a sub-block may be encoded and signaled.

Meanwhile, a size/a shape of a sub-block generated by partitioning a current block and a size/a shape of a sub-block generated by partitioning a reference region may be set differently. As an example, a current block may be partitioned into 4x4-sized sub-blocks, while a reference region may be partitioned into 8x8-sized sub-blocks.

For convenience of a description, in this example, it is assumed that a size of a sub-block for a luma component is 4x4.

Afterwards, each sub-block for a luma component may be classified into one of a plurality of classes. Specifically, one of a plurality of classes may be allocated to each sub-block within a luma block and each sub-block within a luma reference region. The classification may be performed only for sub-blocks of a luma component.

The classification of a sub-block may be performed based on the sum of reconstructed samples within a sub-block. As an example, a class allocated to a sub-block may be determined by an example in Equation 17 and Equation 18 below.

【Equation 17】

$$ClassIdx = (sub\_blk\_sum \quad * A) \gg \left(bitDepth + log_2(H \times W)\right)$$

【Equation 18】

$$sub\_blk\_sum = \quad \sum_{h=0}^{H-1} \sum_{w=0}^{W-1} \{ \ blk[w,h]\}$$

In Equation 17, ClasIdx refers to an index of a class allocated to a sub-block. H and W refer to a height and a width of a sub-block, respectively. A refers to the total number of classes. As an example, when A is 10, it means that a sub-block is classified into one of the 10 classes. In other words, when A is 10, ClassIdx may be determined as one of 0 to 9.

The total number of classes may be predefined in an encoder and a decoder. Alternatively, information representing the total number of classes may be explicitly encoded and signaled. Meanwhile, the information may be signaled through at least one of a video parameter set, a sequence parameter set, a picture parameter set, a picture header or a slice header.

In Equation 18, sub_blk[w, h] refers to a sample value at a position of [w, h] within a sub-block.

All samples in a sub-block may be combined to derive variable sub_blk_sum, and based on variable sum_blk_sum, index classIdx of a class to be allocated to a sub-block may be determined.

As another example, a class allocated to a sub-block may be determined by using a gradient. Specifically, after calculating a gradient at each position within a sub-block, the sum of gradients at each position may be set as a gradient of a sub-block. In this case, a gradient may include at least one of a horizontal gradient, a vertical gradient, a top-right diagonal gradient or a top-left diagonal gradient.

A gradient for a specific direction may be derived based on neighboring samples placed in a specific direction from a gradient derivation target sample. As an example, a horizontal gradient may be derived by using a left neighboring sample and a right neighboring sample of a gradient derivation target sample. A vertical gradient may be derived by using a top neighboring sample and a bottom neighboring sample of a gradient derivation target sample. A top-right diagonal gradient may be derived by using a top-right neighboring sample and a bottom-left neighboring sample of a gradient derivation target sample. A top-left diagonal gradient may be derived by using a top-left neighboring sample and a bottom-right neighboring sample of a gradient derivation target sample.

Meanwhile, when a sample is positioned at a boundary of a sub-block, at least one neighboring sample for a corresponding sample is positioned outside a sub-block. Considering this, an extended region may be defined around a sub-block, and a gradient for each sample included in a sub-block may be derived by including samples included in an extended region.

An extended region may be defined as a region including N lines adjacent to at least one of the left, the right, the top or the bottom of a sub-block. As an example, when a size of a sub-block is 4x4 and an extended region is composed of one line on each of the left, the right, the top and the bottom of a sub-block, a gradient for each sample in a sub-block may be derived by using samples included in a 6x6-sized block.

Alternatively, for at least one sample included in an extended region, a gradient may be derived. In this case, a gradient for a sub-block may be derived by adding a gradient for samples within a sub-block and a gradient fo samples within an extended region.

A size of an extended region may be predefined in an encoder and a decoder.

Alternatively, information representing a size of an extended region may be encoded and signaled.

Alternatively, a size of an extended region may be adaptively determined based on at least one of a color format or a size or a shape of a current block.

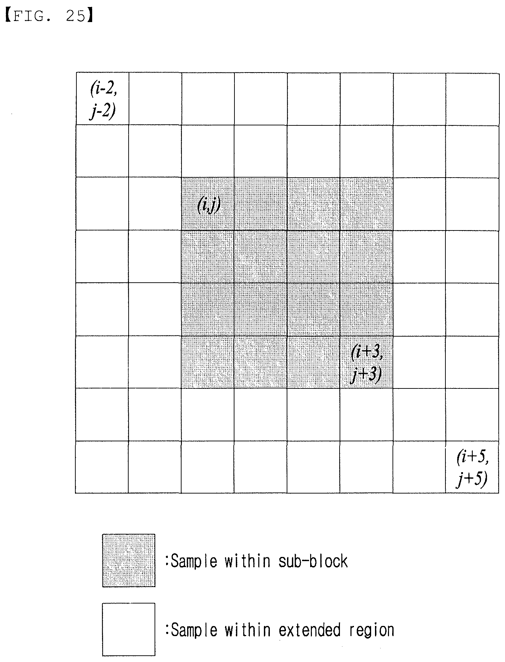

FIG. 25 shows an example in which a gradient for a sub-block is derived.

For convenience of a description, it is assumed that a size of a sub-block is 4x4. In addition, it is assumed that by including a sub-block and an extended region, a 8x8-sized region is used to calculate a gradient of a sub-block, and it is assumed that a gradient of a sub-block is derived by adding a gradient of each sample in a 6x6-sized region.

In an example shown in FIG. 25, a gradient of a sub-block may be derived as in an example of Equation 19 to Equation 22.

【Equation 19】

$$g_v = \sum_{k=i-2}^{i+5} \sum_{l=j-2}^{j+5} V_{k,l}, V_{k,l} = |2R(k,l) - R(k,l-1) - R(k,l+1)|$$

【Equation 20】

$$g_h = \sum_{k=i-2}^{i+5} \sum_{l=j-2}^{j+5} H_{k,l}, H_{k,l} = |2R(k,l) - R(k-1,l) - R(k+1,l)|$$

【Equation 21】

$$g_{d1} = \sum_{k=i-2}^{i+5} \sum_{l=j-2}^{j+5} D1_{k,l}, D1_{k,l} = |2R(k,l) - R(k-1,l-1) - R(k+1,l+1)|$$

【Equation 22】

$$g_{d2} = \sum_{k=i-2}^{i+5} \sum_{j=j-2}^{j+5} D2_{k,l}, D2_{k,l} = |2R(k,l) - R(k-1,l+1) - R(k+1,l-1)|$$

In Equation 19 to Equation 22, (i, j) represents a position of a top-left sample in a 4x4-sized sub-block. R(k, 1) represents a sample value at a position of (k, 1) position. |x| represents an absolute value of x.

$V_{k,l}$ represents a vertical gradient of a sample at a position of (k, 1) and $g_v$ represents a vertical gradient of a sub-block.

$H_{k,l}$ represents a horizontal gradient of a sample at a position of (k, 1) and $g_h$ represents a horizontal gradient of a sub-block.

$D1_{k,l}$ represents a top-right diagonal gradient of a sample at a position of (k, 1) and $g_{d1}$ represents a top-right diagonal gradient of a sub-block.

$D2_{k,l}$ represents a top-left diagonal gradient of a sample at a position of (k, 1) and $g_{d2}$ represents a top-left diagonal gradient of a sub-block.

A gradient of a sub-block may be used to determine a class for a sub-block. Specifically, one of a plurality of classes may be allocated to a sub-block. As an example, when the number of classes is 25, a class index indicating one of 0 to 24 may be allocated to a sub-block.

Meanwhile, a class allocated to a sub-block may be determined by comparing a value between gradients. Specifically, variable DirHV and/or DirD for determining a class may be derived based on at least one of the maximum value, the minimum value, a median value or an average value of gradients.

Equation 23 shows an example of distinguishing the maximum value and the minimum value of a gradient for a vertical-horizontal direction (hereinafter, referred to as a first cross direction).

【Equation 23】

$$g_{h,v}^{max} = max(g_h, g_v), \quad g_{h,v}^{min} = min(g_h, g_v)$$

The maximum value and the minimum value for a first cross direction may be compared to derive variable DirHV for a first cross direction for a sub-block. As an example, when $g_v$ is greater than $g_h$, variable DirHV is set as 1 and otherwise, variable DirHV is set as 3.

Next, as in an example of Equation 24, the maximum value and the minimum value of a gradient for a top-left diagonal-top right diagonal direction (hereinafter, referred to as a second cross direction) may be distinguished.

【Equation 24】

$$g_{d0,d1}^{max} = max(g_{d0}, g_{d1}), \quad g_{d0,d1}^{min} = min(g_{d0}, g_{d1})$$

The maximum value and the minimum value for a second cross direction may be compared to derive variable DirD for a second cross direction for a sub-block. As an example, when gd0 is greater than gd1, variable DirD is set as 0 and otherwise, variable DirD is set as 2.

Afterwards, a direction with a strong tendency may be determined by using first cross direction gradients and second cross direction gradients. Specifically, a direction with a strong tendency may be determined by comparing the product of the maximum value among the second cross direction gradients (i.e., $g_{d0,d1}{}^{max}$) and the minimum value among the first cross direction gradients (i.e., $g_{h,v}{}^{min}$) with the product of the minimum value among the second cross direction gradients (i.e., $g_{d0,d1}{}^{min}$) and the minimum value among the first cross direction gradients (i.e., $g_{h,v}{}^{max}$).

Specifically, according to Equation 25 and Equation 26, the maximum value and the minimum value of a direction with a stronger tendency may be derived.

【Equation 25】

$$hvd1 = \left(g_{d0,d1}^{max} * g_{h,v}^{min} > g_{h,v}^{max} * g_{d0,d1}^{min}\right)? \, g_{d0,d1}^{max} : g_{h,v}^{max}$$

【Equation 26】

$$hvd0 = \left(g_{d0,d1}^{max} * g_{h,v}^{min} > g_{h,v}^{max} * g_{d0,d1}^{min}\right)? \, g_{d0,d1}^{min} : g_{h,v}^{min}$$

hvd1 is a variable that reflects the maximum value of a gradient for a direction with a stronger tendency between a first cross direction and a second cross direction, and hvd0 is a variable that reflects the minimum value of a gradient for a direction with a stronger tendency between a first cross direction and a second cross direction.

Then, according to Equation 27 and Equation 28, an index of ae direction with a stronger tendency is set.

【Equation 27】

$$dir1 = \left(g_{d0,d1}^{max} * g_{h,v}^{min} > g_{h,v}^{max} * g_{d0,d1}^{min}\right)?\,DirD : DirHV$$

【Equation 28】

$$dir2 = \left(g_{d0,d1}^{max} * g_{h,v}^{min} > g_{h,v}^{max} * g_{d0,d1}^{min}\right)?\,DirHV : DirD$$

dir1 is a variable that reflects a value of a variable for a direction with a stronger tendency between a first cross direction and a second cross direction, and dir2 is a variable that reflects a value of a variable for a direction with a weaker tendency between a first cross direction and a second cross direction.

Afterwards, Equation 29 may be used to set variable dirS according to a difference between the maximum value and the minimum value of a direction with a strong tendency between a first cross direction and a second cross direction.

【Equation 29】

$$dirS = (hvd1 * 2 > 9 * hvd0)?\,2 : \left((hvd1 > 2 * hvd0)?\,1 : 0\right)$$

When variable dirS is determined, class index ClassIdx to be allocated to a sub-block may be determined by using Equation 30 below. As an example, when there are a total of 25 classes, ClassIdx may be determined as a value of 0 to 24.

【Equation 30】

$$ClassIdx = (dirS = 0)?\,Q[g_h + g_v] : \left(\left((dir1 \wedge 0x1) \ll 1\right) + dirS\right) * 5 + Q[g_h + g_v]$$

In this Equation 30, $Q[g_h+g_v]$ represents a value obtained by quantizing the sum of $g_h$ and $g_v$. When the number of classes is 25, $Q[g_h+g_v]$ may be set as a value of 0 to 4.

Meanwhile, in order to simplify gradient calculation, the number of samples used to calculate a gradient of a sub-block may be reduced. Specifically, it may be set to reduce a size of an extended region or use only samples at a subsampled position, simplifying gradient calculation.

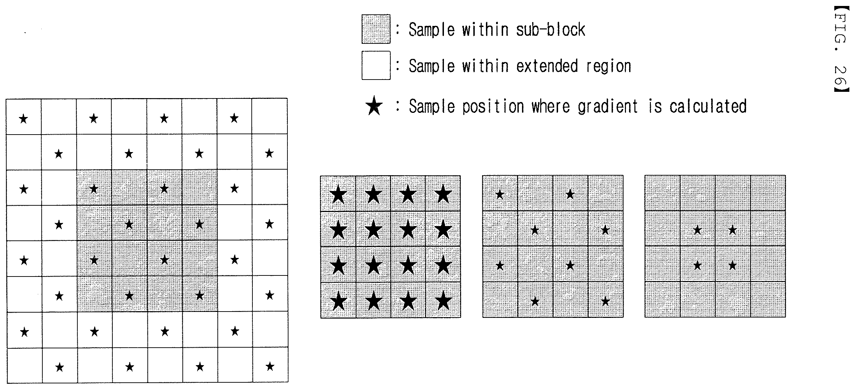

FIG. 26 shows an example for describing samples used to calculate a gradient.

FIG. 26 shows an example in which reconstructed samples included in a sub-block and reconstructed samples included in an extended region are used. In this case, in order to simplify gradient calculation, as in an example shown in FIG. 26(a), a gradient may be calculated by using only reconstructed samples at a sub-sampled position.

Alternatively, as in an example shown in FIG. 26(b), a class of a sub-block may be determined by using only a gradient of samples included in a sub-block.

Alternatively, as in an example shown in FIG. 26(c) and (d), a class of a sub-block may be determined by using only a gradient at a sub-sampled position within a sub-block.

Meanwhile, when sub-sampling is applied, a sub-sampling method or a sub-sampling rate may be predefined in an encoder and a decoder.

Alternatively, information on at least one of whether to perform sub-sampling, a sub-sampling method or a sub-sampling rate may be encoded and signaled.

Alternatively, based on at least one of a color format or a size or a shape of a current block, at least one of whether to perform sub-sampling, a sub-sampling method or a sub-sampling rate may be adaptively determined.

In order to simplify class determination, a class may be determined by using only one of a first cross direction and a second cross direction. As an example, for example, a class may be determined by using only gradients for a vertical direction and a horizontal direction or a class may be determined by using only gradients for a top-right diagonal direction and a top-left diagonal direction.

Meanwhile, based on at least one of a size or a shape of a current block, one of a first cross direction and a second cross direction may be selected.

Alternatively, at least one of a range of samples for deriving a class or a direction of a gradient used to derive a class may be independently determined for each unit region. Here, a unit region may represent a region that may be processed in parallel with another region, and as an example, may represent a tile, a slice or a sub-picture.

As an example, when there are two tiles in a picture, a gradient of a sub-block may be determined by using all gradients of a first cross direction and a second cross direction in a first tile, while a gradient of a sub-block may be determined by using only gradients of a first cross direction or a second cross direction in a second tile.

To this end, information representing whether to use both a first cross direction and a second cross direction or information indicating whether it is set to use a first cross direction or a second cross direction may be encoded for each unit region.

A class of a luma sub-block corresponding to a chroma sub-block to be predicted in a chroma block is checked. When there is a sub-block with the same class as a luma sub-block within a reference region of a luma block, prediction for a chroma sub-block may be performed by using a filter coefficient derived based on a corresponding sub-block.

Specifically, a filter coefficient may be derived by using reconstructed samples included by a reference sub-block for a luma component and reconstructed samples included by a reference sub-block for a chroma component corresponding to the sub-block.

When there are a plurality of reference sub-blocks with the same class as a luma sub-block in a reference region, a filter coefficient may be derived by using one of a plurality of sub-blocks. Alternatively, reference sub-blocks with the same class may be grouped to derive a filter coefficient for a group. As an example, when a class of a first reference sub-block for a luma component is the same as a class of a second reference sub-block for a luma component, a filter coefficient for a group may be derived by using reconstructed samples included in a first reference sub-block and a second reference sub-block and reconstructed samples included by reference sub-blocks corresponding to the first reference sub-block and the second reference sub-block in a reference region of a chroma block.

Deriving a filter coefficient based on luma reconstructed samples and chroma reconstructed samples may be based on at least one of the embodiments described in the present disclosure.

Meanwhile, when there is no reference sub-block having the same class as a class of a luma sub-block, a filter coefficient set as default may be used. Here, a filter coefficient set as default may be predefined in an encoder and a decoder or may be derived for the entire reference region.

Alternatively, when there is no reference sub-block having the same class as a class of a luma sub-block, a filter coefficient derived by using a reference sub-block to which a class index with the smallest difference between a luma sub-block and a class index is allocated may be used.

A term of syntaxes used in the above-described embodiments is just named for convenience of a description.

When embodiments described based on a decoding process or an encoding process are applied to an encoding process or a decoding process, it is included in a scope of the present disclosure. When embodiments described in predetermined order are changed in order different from a description, it is also included in a scope of the present disclosure.

The above-described disclosure is described based on a series of steps or flow charts, but it does not limit a time series order of the present disclosure and if necessary, it may be performed at the same time or in different order. In addition, each component (e.g., a unit, a module, etc.) configuring a block diagram in the above-described disclosure may be implemented as a hardware device or software and a plurality of components may be combined and implemented as one hardware device or software. As an example, the hardware device may include at least one of a processor for performing an operation, a memory for storing data, a transmitter for transmitting data and a receiver for receiving data.

The above-described disclosure may be recorded in a computer readable recoding medium by being implemented in a form of a program instruction which may be performed by a variety of computer components. The computer readable recoding medium may include a program instruction, a data file, a data structure, etc. solely or in combination.

In addition, according to the present disclosure, a computer readable recording medium storing a bitstream generated by the above-described encoding method may be provided. The bitstream may be transmitted by an encoding device and a decoding device may receive the bitstream to decode an image.

A hardware device which is specially configured to store and perform magnetic media such as a hard disk, a floppy disk and a magnetic tape, optical recording media such as CD-ROM, DVD, magneto-optical media such as a floptical disk and a program instruction such as ROM, RAM, a flash memory, etc. is included in a computer readable recoding medium. The hardware device may be configured to operate as one or more software modules in order to perform processing according to the present disclosure and vice versa.

[Industrial Availability]

The present disclosure may be applied to a computing or electronic device which may encode/decode a video signal.

**Claims**

1. A method of decoding an image, the method comprising:

   deriving filter coefficients for a prediction of a chroma block; and
   deriving, based on the filter coefficients, a prediction sample for the chroma block by filtering a plurality of luma reconstructed samples within a luma block corresponding to the chroma block.

2. The method of claim 1, wherein a shape of a filter applied to the luma reconstructed samples is determined based on at least one of a color format or a size or a shape of a current block, the current block being the chroma block or the luma block.

3. The method of claim 2, wherein the filter is determined as one of a plurality of filter candidates, and wherein the plurality of filter candidates include a first filter candidate in a square shape and a second filter candidate in a non-square shape.

4. The method of claim 1, wherein the filter coefficients are derived based on reconstructed samples included in a luma reference region around the luma block and reconstructed samples included in a chroma reference region around the chroma block.

5. The method of claim 4, wherein the filter coefficient is derived based on a feature value of the reconstructed samples included in the luma reference region.

6. The method of claim 5, wherein the feature value is a gradient value derived by applying a mask to the reconstructed samples included in the luma reference region.

7. The method of claim 6, wherein the mask is one of a plurality of mask candidates, and wherein selecting the mask among the plurality of mask candidates is based on at least one of a color format or a filter shape.

8. The method of claim 1, wherein the prediction of the chroma block is performed in a unit of a sub-block.

9. The method of claim 8, wherein a class index is allocated to a luma sub-block corresponding to a chroma sub-block in the chroma block, and wherein the filter coefficient is derived based on a reference sub-block to which a same class index as a class index allocated to the luma sub-block is allocated within a reference region around the luma block.

10. The method of claim 9, wherein the class index allocated to the luma sub-block is derived based on at least one of first cross-directional gradients or second cross-directional gradients for reconstructed samples within the luma sub-block.

11. The method of claim 9, wherein when there is no reference sub-block to which the same class index as the class index allocated to the luma sub-block is allocated within the reference region around the luma block, the filter coefficient is set as a default value.

12. The method of claim 9, wherein when there is no reference sub-block to which the same class index as the class index allocated to the luma sub-block is allocated within the reference region around the luma block, the filter coefficient is derived by using a reference sub-block to which the class index allocated to the luma sub-block and a class index with a smallest difference value are allocated.

13. The method of claim 8, wherein whether the prediction is performed in the unit of the sub-block is determined based on a flag parsed from a bitstream.

14. A method of encoding an image, the method comprising:

deriving filter coefficients for a prediction of a chroma block; and
deriving, based on the filter coefficients, a prediction sample for the chroma block by filtering a plurality of luma reconstructed samples within a luma block corresponding to the chroma block.

15. A computer readable recording medium storing a bitstream encoded by an image encoding method, the image encoding method comprising:

deriving filter coefficients for a prediction of a chroma block; and
deriving, based on the filter coefficients, a prediction sample for the chroma block by filtering a plurality of luma reconstructed samples within a luma block corresponding to the chroma block.

[FIG. 1]

EP 4 589 946 A1

【FIG. 2】

【FIG. 3】

| Determine reference line of current block | ~ S300 |

↓

| Determine intra prediction mode of current block | ~ S310 |

↓

| Perform intra prediction for current block | ~ S320 |

【FIG. 4】

0: Planar mode
1 : DC mode

【FIG. 5】

0:Planar mode
1:DC mode

EP 4 589 946 A1

【FIG. 6】

REFERENCE SAMPLE

PREDICTION SAMPLE

【FIG. 7】

REFERENCE SAMPLE

31

【FIG. 8】

PREDICTION SAMPLE

INTEGER POSITION REFERENCE SAMPLE

FRACTIONAL POSITION REFERENCE SAMPLE

【FIG. 9】

(a)

(b)

【FIG. 10】

| Intra prediction mode | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|---|
| tanθ × 32 | X | X | 32 | 29 | 26 | 23 | 20 | 18 | 16 | 14 | 12 | 10 | 8 | 6 | 4 | 3 | 2 | 1 | 0 | -1 | -2 | -3 | -4 |
| Intra prediction mode | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 |
| tanθ × 32 | -6 | -8 | -10 | -12 | -14 | -16 | -18 | -20 | -23 | -26 | -29 | -32 | -29 | -26 | -23 | -20 | -18 | -16 | -14 | -12 | -10 | -8 | -6 |
| Intra prediction mode | 46 | 47 | 48 | 49 | 50 | 51 | 52 | 53 | 54 | 55 | 56 | 57 | 58 | 59 | 60 | 61 | 62 | 63 | 64 | 65 | 66 | | |
| tanθ × 32 | -4 | -3 | -2 | -1 | 0 | 1 | 2 | 3 | 4 | 6 | 8 | 10 | 12 | 14 | 16 | 18 | 20 | 23 | 26 | 29 | 32 | | |

【FIG. 11】

| Intra prediction mode | -14 | -13 | -12 | -11 | -10 | -9 | -8 | -7 | -6 | -5 | -4 | -3 | -2 | -1 |
|---|---|---|---|---|---|---|---|---|---|---|---|---|---|---|
| tanθ × 32 | 512 | 341 | 256 | 171 | 128 | 102 | 86 | 73 | 64 | 57 | 51 | 45 | 39 | 35 |
| Intra prediction mode | 67 | 68 | 69 | 70 | 71 | 72 | 73 | 74 | 75 | 76 | 77 | 78 | 79 | 80 |
| tanθ × 32 | 35 | 39 | 45 | 51 | 57 | 64 | 73 | 86 | 102 | 128 | 171 | 256 | 341 | 512 |

【FIG. 12】

⬤ Reference sample
◍ Prediction sample
⬥ Reference sample generated through interpolation
⟶ Projection for interpolation
➡ Prediction direction in directional mode

【FIG. 13】

【FIG. 14】

Reference sample

Prediction sample

Reference sample generated through interpolation

Prediction direction in directional mode

【FIG. 15】

| Derive prediction parameter | ~ S1510 |

| Obtain chroma prediction sample by using prediction parameter and reconstructed luma sample | ~ S1520 |

【FIG. 16】

⋮

⊘ ⊘ ⊘ ⊘ ⊘ ⊘ ⊘ ⊘ ⊘ ⊘

⊘ ⊘ ⊘ ⊘ ⊘ ⊘ ⊘ ⊘ ⊘ ⊘ ···

⊘ ⊘ ⊘ ⊘ ⊘ ⊘ ⊘ ⊘ ⊘ ⊘

⊘ ⊘ ◎ ◎ ◎ ◎

··· ⊘ ⊘ ◎ ◎ ◎ ◎

⊘ ⊘ ◎ ◎ ◎ ◎     ⊘ Luma reference sample

⊘ ⊘ ◎ ◎ ◎ ◎     ◎ Luma sample

⊘ ⊘                Luma block

⊘ ⊘

⊘ ⊘

⊘ ⊘
⋮

⋮

● ● ● ● ● ···

··· ● ◎ ◎

● ◎ ◎

● Chroma block

● ● Chroma reference sample

⋮ ◎ Chroma sample

【FIG. 17】

● Position where downsampling is performed

Luma block

【FIG. 18】

【FIG. 19】

Luma block

Luma reference sample
Luma sample

【FIG. 20】

【FIG. 21】

Current block

Reference region

【FIG. 22】

| 1 | 0 | -1 |
|---|---|---|
| 1 | 0 | -1 |

| 0 | 2 | -2 |
|---|---|---|
| 0 | 1 | -1 |

| 1 | -1 | 0 |
|---|---|---|
| 1 | -1 | 0 |

| 0 | 1 | -1 |
|---|---|---|
| 0 | 1 | -1 |

| 1 | 2 | 1 |
|---|---|---|
| -1 | -2 | -1 |

| 1 | 1 | 1 |
|---|---|---|
| -1 | -1 | -1 |

| 1 | 1 | 0 |
|---|---|---|
| -1 | -1 | 0 |

| 0 | 1 | 1 |
|---|---|---|
| 0 | -1 | -1 |

| 2 | 1 | -1 |
|---|---|---|
| 1 | -1 | -2 |

| 1 | 1 | -1 |
|---|---|---|
| 1 | -1 | -1 |

| 1 | 1 | 0 |
|---|---|---|
| 0 | -1 | -1 |

| 1 | 2 | 0 |
|---|---|---|
| 0 | -2 | -1 |

| -1 | 1 | 2 |
|---|---|---|
| -2 | -1 | 1 |

| -1 | 1 | 1 |
|---|---|---|
| -1 | -1 | 1 |

| 0 | 1 | 1 |
|---|---|---|
| -1 | -1 | 0 |

| 0 | 2 | 1 |
|---|---|---|
| -1 | -2 | 0 |

【FIG. 23】

| 1 | 0 | -1 |
|---|---|---|
| 1 | 0 | -1 |
| 1 | 0 | -1 |

| 1 | 0 | 0 |
|---|---|---|
| 1 | 0 | -1 |
| 0 | 0 | -1 |

| 0 | 0 | -1 |
|---|---|---|
| 1 | 0 | -1 |
| 1 | 0 | 0 |

| 1 | 1 | 1 |
|---|---|---|
| 2 | 0 | -2 |
| 1 | 0 | -1 |

| 0 | 1 | 1 |
|---|---|---|
| 0 | 0 | 0 |
| -1 | -1 | 0 |

| 1 | 1 | 0 |
|---|---|---|
| 0 | 0 | 0 |
| 0 | -1 | -1 |

| 1 | 0 | -1 |
|---|---|---|
| 2 | 0 | -2 |
| 1 | 0 | -1 |

| 1 | 0 | 0 |
|---|---|---|
| 2 | 0 | -2 |
| 0 | 0 | -1 |

| 0 | 0 | -1 |
|---|---|---|
| 2 | 0 | -2 |
| 1 | 0 | 0 |

| 1 | 2 | 1 |
|---|---|---|
| 0 | 0 | 0 |
| -1 | -2 | -1 |

| 0 | 2 | 1 |
|---|---|---|
| 0 | 0 | 0 |
| -1 | -2 | 0 |

| 1 | 2 | 0 |
|---|---|---|
| 0 | 0 | 0 |
| 0 | -2 | -1 |

【FIG. 24】

Current block

Reference region

【FIG. 25】

:Sample within sub-block

:Sample within extended region

【FIG. 26】

## INTERNATIONAL SEARCH REPORT

| | International application No. |
|---|---|
| | **PCT/KR2023/013885** |

| A. | CLASSIFICATION OF SUBJECT MATTER |
|---|---|

**H04N 19/132**(2014.01)i; **H04N 19/186**(2014.01)i; **H04N 19/105**(2014.01)i; **H04N 19/70**(2014.01)i; **H04N 19/593**(2014.01)i

According to International Patent Classification (IPC) or to both national classification and IPC

| B. | FIELDS SEARCHED |
|---|---|

Minimum documentation searched (classification system followed by classification symbols)

H04N 19/132(2014.01); H04N 19/11(2014.01); H04N 19/117(2014.01); H04N 19/124(2014.01); H04N 19/30(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 크로마 블록 예측 샘플(chroma block prediction sample), 필터 계수(filter coefficient), 루마 복원 샘플(luma restoration sample), 필터링(filtering), 특징 값(feature values), 마스크(mask)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0049486 A (LG ELECTRONICS INC.) 21 April 2022 (2022-04-21)<br>See paragraphs [0112], [0164] and [0193]-[0194]; and claim 1. | 1-8,13-15 |
| A | | 9-12 |
| Y | JP 2014-533012 A (QUALCOMM INCORPORATED) 08 December 2014 (2014-12-08)<br>See claims 1 and 7. | 1-8,13-15 |
| A | KR 10-2021-0100739 A (LG ELECTRONICS INC.) 17 August 2021 (2021-08-17)<br>See paragraphs [0010]-[0013]. | 1-15 |
| A | KR 10-2015-0050561 A (INTEL CORPORATION) 08 May 2015 (2015-05-08)<br>See paragraph [0033]. | 1-15 |
| A | KR 10-2022-0038710 A (TENCENT AMERICA LLC) 29 March 2022 (2022-03-29)<br>See paragraph [0024]. | 1-15 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 January 2024** | **05 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 589 946 A1

## INTERNATIONAL SEARCH REPORT
### Information on patent family members

International application No.

**PCT/KR2023/013885**

| Patent document cited in search report | | | Publication date (day/month/year) | Patent family member(s) | | | Publication date (day/month/year) |
|---|---|---|---|---|---|---|---|
| KR | 10-2022-0049486 | A | 21 April 2022 | AU | 2020-337710 | A1 | 04 March 2021 |
| | | | | CA | 3152954 | A1 | 04 March 2021 |
| | | | | CN | 114586349 | A | 03 June 2022 |
| | | | | EP | 4024859 | A1 | 06 July 2022 |
| | | | | JP | 2022-545838 | A | 31 October 2022 |
| | | | | JP | 7368603 | B2 | 24 October 2023 |
| | | | | US | 2022-0337841 | A1 | 20 October 2022 |
| | | | | WO | 2021-040479 | A1 | 04 March 2021 |
| JP | 2014-533012 | A | 08 December 2014 | CN | 103891293 | A | 25 June 2014 |
| | | | | CN | 103891293 | B | 06 February 2018 |
| | | | | EP | 2769548 | A1 | 27 August 2014 |
| | | | | JP | 5922245 | B2 | 24 May 2016 |
| | | | | KR | 10-1617107 | B1 | 29 April 2016 |
| | | | | KR | 10-2014-0079498 | A | 26 June 2014 |
| | | | | US | 2013-0101018 | A1 | 25 April 2013 |
| | | | | US | 9807403 | B2 | 31 October 2017 |
| | | | | WO | 2013-059461 | A1 | 25 April 2013 |
| KR | 10-2021-0100739 | A | 17 August 2021 | CN | 113491115 | A | 08 October 2021 |
| | | | | US | 2021-0368165 | A1 | 25 November 2021 |
| | | | | WO | 2020-180119 | A1 | 10 September 2020 |
| KR | 10-2015-0050561 | A | 08 May 2015 | CN | 104541506 | A | 22 April 2015 |
| | | | | EP | 2901692 | A1 | 05 August 2015 |
| | | | | EP | 2911397 | A1 | 26 August 2015 |
| | | | | JP | 2015-530805 | A | 15 October 2015 |
| | | | | KR | 10-2015-0038249 | A | 08 April 2015 |
| | | | | SG | 11201500311 | A | 27 February 2015 |
| | | | | US | 2014-0286408 | A1 | 25 September 2014 |
| | | | | US | 2015-0181216 | A1 | 25 June 2015 |
| | | | | WO | 2014-047893 | A1 | 03 April 2014 |
| KR | 10-2022-0038710 | A | 29 March 2022 | CN | 114600453 | A | 07 June 2022 |
| | | | | EP | 3997671 | A1 | 18 May 2022 |
| | | | | JP | 2023-508686 | A | 03 March 2023 |
| | | | | US | 11595676 | B2 | 28 February 2023 |
| | | | | US | 2022-0086472 | A1 | 17 March 2022 |
| | | | | US | 2023-0110374 | A1 | 13 April 2023 |
| | | | | WO | 2022-060437 | A1 | 24 March 2022 |

Form PCT/ISA/210 (patent family annex) (July 2022)